# EUROPEAN PATENT APPLICATION

(11) **EP 2 273 250 A1**
(43) Date of publication of application: **12.01.2011**
(21) Application number: 09738722.9
(22) Date of filing: 20.04.2009
(51) Int. Cl.: G01N 1/00, B65D 51/24, B65D 81/38, B65G 1/00

(54) **SAMPLE LOW-TEMPERATURE STORAGE CASE AND ORGANISM TRANSPORTATION SUPPORTING SYSTEM**

(30) Priority: 28.04.2008 JP 2008116764; 19.11.2008 JP 2008295110
(71) Applicant: Hitachi Ltd., Chiyoda-ku Tokyo 100-8280 (JP)
(72) Inventor: SAHO, Norihide, Hitachinaka-shi Ibaraki 312-0034 (JP); HAKARI, Mami, Hitachinaka-shi Ibaraki 312-0034 (JP); TANAKA, Hiroyuki, Hitachinaka-shi Ibaraki 312-0034 (JP); TANAKA, Sachi, Hitachinaka-shi Ibaraki 312-0034 (JP); YASUKAWA, Yoshihito, Hitachinaka-shi Ibaraki 312-0034 (JP); NOMIYAMA, Akira, Hitachinaka-shi Ibaraki 312-0034 (JP); SAITO, Shinjiro, Hitachinaka-shi Ibaraki 312-0034 (JP); AMINO, Azusa, Hitachinaka-shi Ibaraki 312-0034 (JP); MATSUKA, Daisuke, Hitachinaka-shi Ibaraki 312-0034 (JP); CHIBA, Kohtaro, Hitachinaka-shi Ibaraki 312-0034 (JP); TOYODA, Hiroyuki, Hitachinaka-shi Ibaraki 312-0034 (JP); NAKAYAMA, Naoko, Hitachinaka-shi Ibaraki 312-0034 (JP); KITAGAWA, Isao, Hiki-gun Saitama 350-0395 (JP); HAGIYA, Isao, Hitachinaka-shi Ibaraki 312-0034 (JP)
(74) Representative: Beetz & Partner
(86) International application number: PCT/JP2009/057880
(87) International publication number: WO 2009/133785

(57) **Abstract**

A sample low-temperature storage case enabling the recipient of the sample to easily check a good condition of the sample when the recipient receives the sample and not using a sublime or evaporative cooling medium such as liquid nitrogen and a transportation business supporting system using the sample low-temperature storage case are disclosed. The storage case has a structure in which a sample storage case (S) contained in a storage case (11) is cooled and held at a low temperature by a Stirling refrigerator (15)- A detection elementl(18) is disposed in a room-temperature area of the storage case (100). The chemical or physical property of the detection element (18) varies when a contaminant adheres to the detection element (18). Entrance of a contaminant into the storage case (100) can be checked by contactlessly checking the detection element (18) from the outside of the storage case (100). The storage case (100) includes a server for receiving the result of the check from the detection device (30), storing the result, and setting up connection via a communication line to at least two out of a terminal operable by the forwarder, a terminal operable by the carrier, and a terminal operable by the recipient to transmit the result to the two.

## Description

### Technical Field

The present invention relates to a sample low-temperature storage case used as a low-temperature transportation and low-temperature storage of samples, and an organism transportation supporting system used therewith.

### Background Art

In general, when organic substance such as cells, microbes, proteins, or the like (hereinafter, referred to as "sample") is transported from the predetermined place for storing (hereinafter, referred to as "Point A") to the other place as used (hereinafter, referred to as "Point B"), the sample is transported in a state maintained to be low temperature in order not to deteriorate the quality of samples during transportation. As a sample low-temperature storage case for such a use, the storage case with a structure, in which the vacuum adiabatic case is filled with liquid nitrogen as a refrigerant and the sample is refrigerated by this liquid nitrogen, has been known.

In case of using such a sample low-temperature storage case, a forwarder is designed to store the sample after pouring liquid nitrogen inside the case at Point A. Such a sample is transported to Point B in a state maintained around -196 degree C by a vehicle or the like. Then, the sample is stored in a freezer maintained, for example, to be below -140 degree C after having been accepted a recipient at Point B.

In case of using liquid nitrogen as a refrigerant, the pressure in the case is maintained a higher positive pressure than the outside air pressure by evaporating gases of refrigerant as constantly generated. On the other hand, in order to prevent a burst of the case, the sample low-temperature storage case is constituted to leak evaporating gases in the outside to maintain its inner pressure to be constant. In such a way, it is prevented contaminant such as cells from entering inside the sample low-temperature storage case by continuously leaking the evaporating gases from an inner space of the sample low-temperature storage case to the outside. Thus, it is possible to maintain a quality of sample to be good. As a result, the fact that no deterioration or no contamination of sample quality during transportation is definitely confirmed, that is, the fact that a condition at the time of goods delivery at Point A is preferably maintained to be good is definitely confirmed. This is extremely important and essential for the recipient,

However, it has a fear of deficiency of oxygen caused by evaporating gases, and it also has a fear of outflow of refrigerant and abnormal evaporation caused by case fall or case rupture in the sample low-temperature storage case using the refrigerant for sublimating or evaporating dry ice, liquid nitrogen, or the like. Therefore, it is, in general, prohibited to take in and transport such sample low-temperature storage case in the cabin or the like having a high degree of sealing property of an airplane or in automotive vehicle, but the special measurement must be required. (For example, transportation by storing in another transportation room different from the general cabin for passengers with use of transportation cargo for preventing fall). As a result, it has a problem to become a large amount of transportation costs in such a way.

Therefore, as the sample low-temperature storage case to be preserved the sample in a state to be refrigerated without using the refrigerant for sublimation and evaporation of liquid nitrogen or the like, a storage case, which is constituted to keep the sample in a state to be refrigerated to be lower than or equal to -140 degree C with a refrigerator, and carry easily in or out the sample for a cool chamber of sample case (microplate) without flowing in or out cool air in the cool chamber, has been proposed. For example, it may be referred to Japanese Patent Laid-open Publication No. 247551 of 2005. More specifically, the sample case is, at first, housed in an anteroom provided in the storage device, in case where the sample case is housed in the storage device from the outside. In this time, the anteroom and the cool chamber are mutually separated. After the anteroom and the outside are closed, an inner door provided between the anteroom and the cool chamber is opened and the sample case is mechanically transported from the anteroom to the cool chamber, then to close the inner door. In case where the sample case is transported from the cool chamber to the outside, a reverse operation relative to the above operation will be done.

### Summary of the Invention

### Problem to be solved by the Invention

However, the storage device disclosed in the above publication has a fear to enter cells being contaminant contained in the air to the anteroom, stick the cells in organism such as microbes, cells, or the like as a sample, and contaminate or deteriorate the sample, when the microplate is carried in or out of the anteroom. As a result, when the sample is transported with use of this storage device, it has a problem that a recipient cannot confirm that the sample is in a non-contaminant condition, or a good condition in quality.

Under these circumstances, the purpose of the present invention is to provide a sample low-temperature storage case, by which a recipient of the sample is able to easily confirm non-contaminant condition of the sample at the time of receiving it without using refrigerant such as liquid nitrogen to be sublimated or evaporated.

In case of using the sample low-temperature storage case, it is confirmed that the sample is not deteriorated in quality and not contaminated (non-contaminant condition, or a good condition in quality), when the sample (organism) is transported from Point A to Point B. In other words, it is extremely important to confirm that a condition at the time of goods delivery at Point A is preferably maintained at Point B. Then, it is extremely important for a recipient at Point B.

In particular, in case where, for example, skin cell of the patient himself or herself in a hospital at Point A is transported to the cultivation center at Point B, induced pluripotent stem (iPS) cell as manufactured in the cultivation center is transported to a hospital, and it is used for the treatment of patients, it is extremely important that non-contaminant condition (good condition in quality) caused by contamination, in particular, no infiltration of cells such as skin cell or iPS cells is confirmed to be good during an outward route and a return route, and also at the time of terminating the transportation.

For example, when the sample is not definitely confirmed to be in good condition in quality and the contamination is found at the time of transportation before cultivation during an outward route, it can be made to retransfer the sample, for example, from a hospital at Point A without cultivating.
Under these circumstances, the purpose of the present invention is to provide an organism transportation supporting system possible for definitely confirming to be non-contaminant (good condition in quality) in the sample.

### Means for solving the Problem

The sample low-temperature storage case relating to the present invention is constituted to keep the sample stored in the storage case in a condition to be cooled down by a refrigerator. It can be inspected whether contaminant is infiltrated inside the sample low-temperature storage case or not by arranging a detection element changing chemical property or physical property caused by sticking contaminant in a room temperature area inside the sample low-temperature storage case and inspecting a detection element in a condition to be out of contact from an outside of the sample low-temperature storage case.

The organism transportation supporting system relating to the present invention is characterized by comprising a storage means memorizing an inspection result of infiltration of contaminant to the inside of the sample low-temperature storage case, and a communication means connecting through the communication line to at least two terminals among a first terminal to be operated by the place to forward of the sample, a second terminal to be operated by the carrier of the sample, and a third terminal to be operated by the place to be forwarded, thus to transfer the inspection result.

### Effect of the Invention

According to the present invention, the recipient of the sample can provide the sample low temperature storage case possible for easily confirming a good condition in quality of the sample at the time of receiving it.
According to the present invention, the organism transportation supporting system possible for confirming no contamination in the sample (organism) can be provided.

### Brief description of Drawings

Figure 1 is a sectional view showing a schematic structure of a sample low temperature storage case (storage case) relating to a first embodiment of the present invention.
Figure 2 is an enlarged view showing an upper structure of the storage case and an inspection means of a detection element,
Figure 3 is an enlarged sectional view of the detection element and a floor of concave portion.
Figure 4 is a schematic view of spectrum measured by a detection device.
Figure 5 is a sectional view showing a part of storage case relating to a second embodiment of the present invention.
Figure 6 is a sectional view showing a part of storage case relating to a third embodiment of the present invention.
Figure 7 is a view explaining an example of organism transportation making use of an organism transportation supporting system relating to a fourth embodiment of the present invention.
Figure 8 is a view depicting a constitution of the organism transportation supporting system relating to a fourth embodiment of the present invention.
Figure 9 is a block diagram of a server.
Figure 10 is a view (first) explaining steps of the organism transportation.
Figure 11 is a view (second) explaining steps of the organism transportation.
Figure 12 is an example of display view for supporting an input of the forwarding and cultivation indication data.
Figure 13 is an example of display view for supporting an input of the cultivation acceptance data.
Figure 14 is an example of display view for inputting the cultivation acceptance data.
Figure 15 is an example of display view for displaying a list of cultivation matching data and supporting a registration of (provisional) acceptance of placing order.
Figure 16 is an example of display view for displaying a list of transportation request data and supporting a registration of (provisional) acceptance of placing order.
Figure 17 is an example of display view for displaying a list of the cultivation matching data and supporting a registration of (provisional) acceptance of receiving order.
Figure 18 is an example of display view for displaying a list of the cultivation request data and supporting a registration of (provisional) acceptance of receiving order.
Figure 19 is an example of display view for displaying a list of quality data at the time of goods receipt and transportation acceptance data and supporting a registration of (definitive) acceptance of receiving order.
Figure 20 is an example of display view displaying a list of transportation environmental data.
Figure 21 is an example of display view for displaying a list of the quality data at the time of goods delivery and receipt and acceptance data (condition) and supporting a registration of (definitive) acceptance of receiving order.
Figure 22 is an example of display view for displaying a list of the cultivation environmental data and supporting an input of the cultivation environmental data.
Figure 23 is an example of display view for displaying a list of the cultivation terminating data and the quality data at the time of terminating cultivation and supporting a registration of (definitive) acceptance of terminating cultivation.
Figure 24 is an example of display view for displaying a list of reforwarding (forwarding) request data and supporting a registration of (provisional) acceptance of receiving order.
Figure 25 is an example of display view for displaying a list of the quality data at the time of receiving goods and reforwarding (forwarding) acceptance data and supporting a registration of (definitive) acceptance of receiving order.
Figure 26 is an example of display view for displaying a list of transportation environmental data at the time of returning goods.
Figure 27 is an example of display view for displaying a list of the quality data at the time of goods delivery and the receipt and acceptance data (conditional) and supporting a registration of (definitive) acceptance of goods.

### Best Mode for carrying out the Invention

### (First Embodiment)

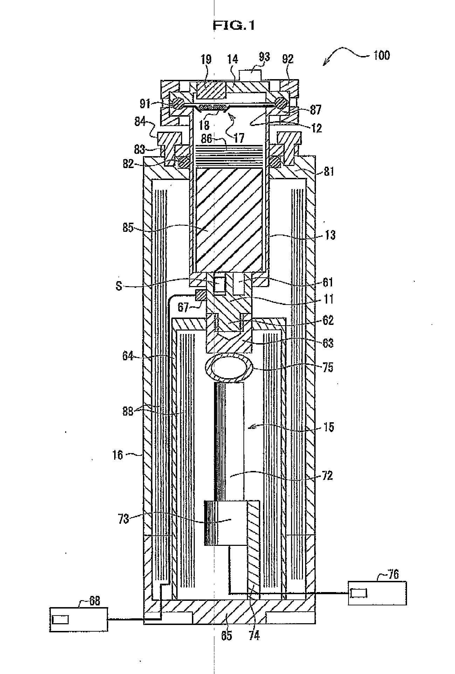

Figure 1 is a sectional view showing a low-temperature storage case of sample (hereinafter, referred to as a storage case) 100 relating to an embodiment of the present invention. This storage case 100 is approximately provided with a storage case 11 (storage means) for storing a sample storage case S storing a body to be cooled (sample), an introduced case 13 (introduced case of sample) attached to the storage case 11 and providing an opening 12 for putting in or out the sample storage case S in the storage case 11, a lid member 14 (closing means) closing the opening 12 of the introduced case 13, a Stirling refrigerator 15 (coldness generating means) refrigerating the sample storage case S stored in the storage case 11, and an adiabatic case 16 (adiabatic means) storing the storage case 11 and the Sterling refrigerator 15 and controlling a thermal transfer from the outside to the storage case 11 and the Stirling refrigerator 15.

The storage case 100 is provided near the opening 12 of the introduced case 13 with a detection element holding member 17 (detection means) holding a detection element 18 for detecting contaminant entered in the storage case 11. The lid member 14 is provided with a window portion 19 in order to inspect the reaction with contaminant of the detection element 18 in a state of the lid member 14 closing the opening 12 of the introduced case 13. Hereinafter, an order of the explanation is not coincident with an order of the above-mentioned numeral, although each constitutional element will be described.

### (Storage means)

The storage case 11 is made of material such as aluminum or copper having a large number of thermal conductivity. The storage case 11 is provided with a plurality of holes 61 with an upper surface being open. Then, the sample storage case S comes to be stored in each of the holes 61. The storage case 11 is provided with a screw portion 62 in a lower surface thereof.

A supporting table 63 for fixing the storage case 11 within the adiabatic case 16 is provided in an upper portion of a support tube 64 having an approximately cylindrical shape, and the support tube 64 is constituted to be stood upright on a lower lid 65 of the adiabatic case 16. The supporting table 63 is provided with a screw hole fitting with a screw portion 62 formed in the storage case 11. The storage case 11 is fixed within the adiabatic case 16 by fitting the screw portion 62 with the screw hole.

The supporting table 63 is made of material such as aluminum or the like being excellent in thermal conductivity. Thus, the storage case 11 and the supporting table 63 are constitutionally and thermally integrated. An expression "the storage case 11 and the supporting table 63 are thermally integrated" means to be the same temperature between the storage case 11 and the supporting table 63. The Stirling refrigerator 15 is designed to cool down the storage case 11 through the supporting table 63 integrated thermally with the storage case 11, thus to cool down the storage case 11 stored in the storage case 11. As later described, the Stirling refrigerator 15 can generate low temperature being less than or equal to 140 degree C. As a result, the sample storage case S can maintain a state to be such low temperature.

The support tube 64 is small in thermal conductivity and made of material having an excellent mechanical strength to support mechanically and stably the storage case 11 and the supporting table 63. For example, various kinds of hard plastic including FRP is preferably used. Although the supporting table 63 held by the support tube 64 is made by the Stirling refrigerator 15, it is required that thermal transfer does not take place between a lower lid 65 and the supporting table 63 on the ground that the lower lid 65 is in contact with outside air and compression heat generated in compression heat of the Stirling refrigerator 15. A hole, as not shown, is formed in a side of the support tube 64. Inner and outer sides are maintained in the same atmosphere (as later described, it is referred to as a vacuum atmosphere).

The storage case 11 is provided with a temperature measuring element 67. This temperature measuring element 67 is designed to be operated by battery power source. For example, a temperature history is designed to record the temperature history (temperature history of sample storage case S) during transportation of the storage case 100). A temperature recording device 68 is provided with a data processing section (as not shown) processing as temperature data measured by the temperature measuring element 67 and a data memory (as not shown) memorizing temperature data prepared by the data processing section.

The data processing section is so called a microcomputer. It is attachably provided, for example, in the temperature recording device 68 as the data memory and an attachable memory device such as SD card is preferably used in a personal computer (PC). The temperature history of the sample storage case S can be easily confirmed by providing such memory device in PC and reading out the temperature data memorized therein.

Although the temperature recording device 68 is shown outside the adiabatic case 16 in Figure 1, the temperature recording device 68 can be constituted to be provided in the adiabatic case 16 The temperature measuring of the storage case 11 by the temperature measuring element 67 and the memory of temperature data by the temperature recording device 68 can be constituted to be manually initiated and terminated. It may be designed to house a watch to confirm the date and time (hour, minute, and second) in the temperature recording device 68 and to start measurement and memory of the temperature data automatically when the Stirling refrigerator 15 starts driving. As the temperature measurement is performed even if a stop of the Stirling refrigerator 15 takes place by an accident and a stop of power supply from the power source 76 (as later referred) driving the Stirling refrigerator 15 takes place, a stop of action of the temperature recording device 68 can preferably be manually operated.

The Stirling refrigerator 15 can be designed to compress Helium (He) gas as working medium, generate coldness by adiabatically expanding He gas in high pressure, and generate low temperature which is less than or equal to about 140 degree C The Stirling refrigerator 15 is arranged in the support tube 64. The Stirling refrigerator 15 is provided with a compression section 73 for compressing He gas, a heat exchanging plate 74 for releasing compression heat generated in the compression section 73, a cooling section 72 generating coldness by adiabatically expanding a high pressure He gas generated in the compression section 73, and a cylindrical ring 75 conducting coldness of the cooling section 72 to the supporting table 63 (storage case 11).

The heat exchanging plate 74 is provided under the lower lid 65 of the adiabatic case 16. The heat transferred from the heat exchanging plate 74 to the lower lid 65 is constituted to radiate from a surface of the lower lid 65 to the outside. Thus, aluminum, which is relatively reasonable in price and excellent in thermal conductivity, is preferably used.

Copper (Cu), which is, in particular, excellent in thermal conductivity, is preferably used The cooling section 72 is secured through the compression section 73 and the heat exchanging plate 74 to the lower lid 65. On the other hand, the storage case 11 is supported by the supporting table 63 and the support tube 64. It is, however, estimated that an amplitude difference and a phase difference take place in each of the storage case 11 and the cooling case 72 in case of applying the vibration and the like from the outside to the storage case. Accordingly, in case where vibration or the like is applied from the outside to the storage case 100 compressed by a constant force between the cooling section 72 and the supporting table 63 toward a radial direction, the contact between the ring 75 and the storage case 11 and the contact between the ring 75 and the cooling section 72 can be established enough by a kind of deformation (deformation caused by deflection) of the ring 75. As a result, the thermal conduction can be preferably maintained between the cooling section 72 and the supporting table 63.

The compression section 73 is provided with the power source 76. Although the power source 76 is shown outside the adiabatic case 16 in Figure 1, the control unit is, for example, constituted to provide in a lower side of the lower lid 65 not to obstruct the radiation from the lower lid 65 and to arrange the power source 76 within this control unit. A battery is used as the power source 76, thus to transport the storage case 100 in a working condition. A rechargeable battery such as Nickel-Metal Hydride battery or Lithium-ion battery is preferably used as a battery. The power source 76 is constituted to easily exchange the rechargeable battery and to recharge with use of AC adapter to domestic power source etc. It is constituted to drive directly the compression section 73 by the AC adapter.

### (Introduced means of sample)

The sample storage case S is put in or out the storage case 11 through the opening 12 of the introduced case 13 and an inside space. For example, the sample storage case S in a state to be cooled down to -196 degree C by liquid nitrogen is housed in the storage case 11 kept in being lower than or equal to -140 degree C in a clean room.

In order to prevent air from infiltrating into the adiabatic case 16 through the gap between an inner surface of the upper surface lid member 81 of the adiabatic case 16 and an outer surface of the introduced case 13, the introduced case 13 is fixed with use of a flange 83 and bolts 84 to fasten an outer surface of the introduced case 13 by an O-ring 82. As later described, the O-ring 82 is ordinarily used in a temperature near normal temperature. Then, plastics such as Fluoride rubber or silicone rubber is preferably used as the O-ring 82.

Although air in the proximity (upper potion) of the opening 12 of the introduced case 13 is approximately the same temperature as outside air, air in the side of the storage case of the introduced case 13 becomes the same temperature as the storage case 11, as the storage case 11 keeps low temperature around 140 degree C in the side of the storage case 11 of the introduced case 13 as above mentioned. The material having small thermal conductivity such as plastic is preferably used in the introduced case 13. A preventive body of convection 85 made of adiabatic material such as expanded polystyrene is arranged in the side of the storage case 11 in order to prevent gaseous convection in an inner space of the introduced case 13 and prevent heat transfer from an upper portion to a lower portion of the introduced case 13- The laminated insulating material 86 for intercepting radiant heat from an upper portion to a lower portion in the introduced case 13 is arranged on the preventive body of convection 85. For example, a structure bundling aluminum foils is preferably used as the laminated insulating material. The above preventive body of convection 85 and the laminated insulating material 86 are also constitutional elements.

### (Closing means)

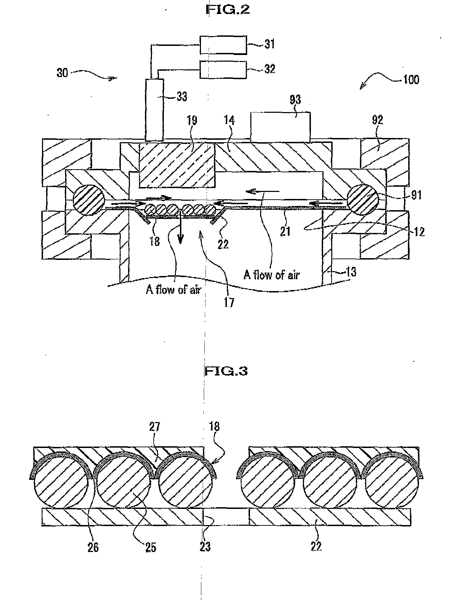

An inner space of the storage case 11 is isolated from outside air by closing the opening 12 of the introduced case 13 with the lid member 14. Body made of metal or plastic is used as the lid member 14. A groove is formed to house an upper portion of the O-ring 91 in an outer circumferential portion of the lid member 14 in order to secure the lid member 14 to the introduced case 13 (Referring to Figure 2 as later mentioned). The introduced case 13 is provided with a ring member 87 supporting an O-ring 91 on the upper surface. The lid member 14 is secured to the introduced case 13 by fastening an outer circumferential portion of the lid member 14 and the ring member 87 of the introduced case 13 with use of the clamp's type of Mounting fixture 92. Plastic such as Fluoride rubber or Silicone rubber is preferably used as the O-ring 91.

The window portion 19 provided in the lid member 14 is made of permeable material such as silica glass in order to measure a change of optical property of the detection element 18 as later described. The lid member 14 is provided with a safety valve 93 for degassing in case of increasing the pressure in the introduced case 13.

### (Adiabatic means)

The inner portion of the adiabatic case 16 is kept in a vacuum atmosphere including an inner portion of the support tube 64. The adiabatic case 16 is provided with piping, as not shown, and switching valve, as not shown, for connecting to a vacuum pump, as not shown, to make vacuum atmosphere in the adiabatic case 16. The adiabatic case 16 has a sufficiently large mechanical strength sustaining a pressure difference with outside pressure and retaining its shape at the time of reducing in pressure atmosphere in the inner portion thereof. Material such as metal or plastic can be used.

In order to intercept radiant heat from an outer circumference of the adiabatic case 16 to the low-temperature section (cooling section 72, ring 75, supporting table 63, and storage case 11) provided in the adiabatic case 16 as an outer circumference of the adiabatic case 16, as the adiabatic case 16 is the same temperature as outer temperature, cylindrical laminated adiabatic material 88 is arranged in each of the inner side of the adiabatic case 16 and the inner side of the support tube 64. Material constituted to bundle aluminum foils is preferably used as the laminated adiabatic material 88 as well as the laminated adiabatic material 88.

In addition, moisture remained in the adiabatic case 16 and gas having higher boiling point than the cooling section 72 are designed to keep a high degree of vacuum in the adiabatic case 16 by sticking at the cooling section 72 as liquid or solid at the time of driving the Stirling refrigerator 15.

### (detection means)

Figure 2 shows an enlarged upper structure of the storage case 100 and depicts a schematic constitution of the inspection device 30 for inspecting the detection element 18. A detection element holding member 17 is constituted to form a concave portion 22 (arranged portion of detection element) for arranging a disk guide tray 21 (air-induced guide portion). Figure 3 is a sectional view showing the detection element 18 and a floor surface of the concave portion 22 (arranged portion of detection element). As shown in Figure 3, a hole 23 is formed in a floor surface of the concave portion 22.

The guide tray 21 is put on an upper surface (ring section 87) of the introduced case 13 and is designed to design a shape not to fall in the introduced case 13. A protrusion of being less than or equal to a thickness of the guide tray 21 is provided on a surface of the ring section 87 in at least one place, and a cutout or a hole engaging with the protrusion may be provided in an outer circumference of the guide tray 21.

Although the preventive body of convection 85 and the laminated adiabatic material 86 are arranged in the introduced case 13, the air in the introduced case 13 keeps negative pressure relative to the outside as mean temperature inside the introduced case 13 is lower than outside temperature. As shown in Figure 2, in case where atmosphere (air) entering through a sealing section (sealing place of the O-ring 91) between the opening 12 of the introduced case 13 and the lid member 14 into the introduced case 13 exists, the atmosphere is introduced from a space formed between the guide tray 21 and the lid member 14 to the concave section 22, flowed through the hole 23 into the introduced case 13, and further diffused to lower portion in the lower portion of the introduced case 13 (in the side of storage case 11).

When the detection element 18 is placed on a floor of the concave portion 22, the detection element 18 easily contacts with atmosphere. As a result, in case where contaminant such as cells is contained in the atmosphere, reaction of the detection element 18 with contaminants can increase in probability. Accordingly, it is designed to increase detection accuracy and detection probability in case of infiltration of contaminants within the storage case 100. Thus, the inspection reliability can be increased by the detection element 18.

The temperature in place disposing the detection element 18 is approximately the same as outside air. In such a way, the detection element 18 is placed in a temperature area, in which an activity of cells etc. infiltrated in the introduced case 13 cannot be controlled. Thus, it can detect the infiltration thereof by a definite reaction between the cells etc. and the detection element 18.

As later described, in case where an inspection of the detection element 18 is done by an optical method, it may fix the detection element 18 in an area to be observed through the window portion 19. On the other hand, in case where an inspection of the detection element 18 is done to be out of contact with the outside by a magnetic (electromagnetic) method, it may fix the detection element 18 in an area to be detected by a magnetic sensor.

As the detection element 18, conventional biomolecular interaction measuring device is used as an immune sensor, and precious metal microparticle sensor to be measured by an optical system can be also used. That is, the precious metal microparticle sensor such as gold (Au), silver (Ag), copper (Cu), and platinum (Pt) is fixed on a floor surface of the concave portion 22. For example, when a plurality of guide trays 21 fixing any detection element 18 in an unreactive condition to the concave portion 22 is prepared, the detection element 18 can be exchanged into new one by changing the guide tray 21.

As shown in Figure 3, the precious metal microparticle sensor has a adsorptive capacity peculiar to antibody, DNA, etc. on an upper surface of the metal particle 25, and is constituted to fix chemical substance or biomolecule (ligand) interacting with a cell etc. as a measuring object (hereinafter, it is referred to as a biomolecule etc. 26). As the detection element 18, it is preferably constituted to cover a surface coated by the biomolecule etc. 26 with excellent water holding capacity polymer 27 having moisture. Thus, an adhesive capacity of cells etc. to the biomolecule 26 improves. That is, the cells are designed to reach the biomolecule etc- through moisture and a probability to chemically combine with the biomolecule etc. 26 is made to improve the inspection probability of cells etc. Thus, the reliability to the judgment of sample contamination improves remarkably.

As the storage case 11 maintaining to be low-temperature by the Stirling refrigerator 15 is arranged below the introduced case 13, the humidity in the introduced case 13 is lower than atmosphere. Then, it is possible to evaporate in a short period in case where moisture is directly contained in the biomolecule etc. 26. Accordingly, the adsorptive capacity of the cell can be maintained to contain the moisture in the biomolecule etc. 26 over a long period by controlling the evaporation of moisture caused by the polymer 27 of water-holding capacity.

### (Inspection device)

The optical inspection device is took up as a theme as the inspection device 30 for inspecting whether the detection element 18 reacts to the cells or not, in a state not to be in contact with the outside of the storage case 100. As shown in Figure 2, the detection device 30 is provided with an optical fiber head 33 arranged to oppose to the window portion 19. The optical fiber head 33 is constituted to radiate the measuring light and receive the reflecting light. The detection device 30 is provided with a light source 31 transferring the measuring light through the optical fiber to the optical fiber head 33, and a data processing device 32 for analyzing by receiving the reflecting light from the detection element 18 received by the optical fiber head 33 through the optical fiber.

Although a detailed illustration of the data processing device 32 is omitted, the data processing device 32 is provided with a spectrophotometer for seeking for an absorption spectrum of the detection element 18 according to the reflection spectrum from the detection element 18, an A/D converter (for changing Analogue to Digital) of the absorption spectrum obtained by the spectrophotometer, a memory device memorizing the digital data changed by the A/D converter, and a display device depicting the absorption spectrum. The A/D converter may be an interface provided in a personal computer (PC). It is constituted to memorize the manufactured digital data in a memory device such as hard disk attaching to PC, and display the obtained absorption spectrum in a monitor ofpersonal computer.

In an inspection of the detection device 30 according to such a constitution, the light generated in the light source 31 is designed to reach the optical fiber head 33 through the optical fiber, and then radiate in the detection element 18 through the window portion 19. The reflected light is designed to receive from the detection element 18 through the window portion 19 to the optical fiber head 33. Then, it is designed to reach the spectrophotometer in the data processing device 32 through the optical fiber, and measure the absorption spectrum. After the absorption spectrum is measured, the obtained analogue data is transferred to the A/D converter. Thereafter, it is designed to exchange into digital data, memorize the digital data in the memory device, and show the spectrum in the display.

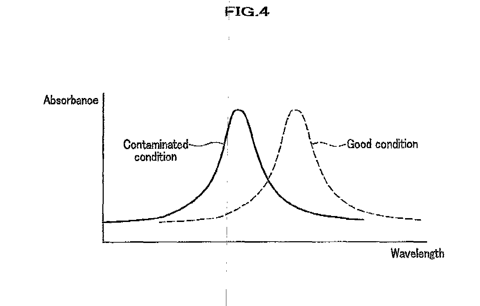

Figure 4 shows schematically the absorption spectrum measured by the detection device. The absorption spectrum of the detection element 18 changes in proportion to a degree of chemical bond of cells to the biomolecule etc. 26 included in the detection element 18. The absorption spectrum of the detection element 18, which is not chemically bonded and a good condition in quality without contamination, becomes a spectroscopic spectrum shown by a dotted line in Figure 4. On the other hand, a absorption spectrum of the detection element 18, which is in a contaminated condition, becomes a spectroscopic spectrum shown by a real line in Figure 4 and a peak-shift phenomenon of the spectroscopic spectrum takes place. The bond rate of cells can be sought in the biomolecule etc. 26 by measuring a gap width of peak in the absorption spectrum obtained by the data processing device 32. As a result, the contamination caused by the cell etc. in the storage case 100 (introduced case 13) can be judged to exist or not.

### (Using mode of storage case)

The forwarder of sample houses the sample (storage case of sample S) in the storage case 100 in a clean room of place to forward. For example, the sample is stored in the storage case 11 in a state of the storage case 11 decreased to a constant temperature by driving the Stirling refrigerator 15 in case of the sample cooled down by liquid nitrogen-On the other hand, the Stirling refrigerator 15 is driven after the sample is stored in the storage case 11 in case of the sample with normal temperature- After the sample is stored in the storage case 11, the preventive body of convection 85 and the laminated insulating material 86 are set. Further, the opening 12 of the introduced case 13 is closed with the lid member 14 by setting the guide tray 21 fixing the detection element 18 not to be contaminated in the opening 12 of the introduced case 13. In addition, the temperature measurement of the storage case 11 is initiated by the temperature measuring element 67 from the time of storing the sample in the storage case 11 thus to record temperature data in the temperature recording device 68.

In sequence, the forwarder measures the absorption spectrum of the detection element 18 with use of the inspection device 30. The measurer transfers the digital data of the obtained absorption spectrum to a receiver of sample, for example, with use of communication means such as internet. It is confirmed that a sample not to be contaminated by cells has already transferred, and a confidence of forwarder is well established.

In the storage case 100, an inner space of the introduced case 13 is cooled down to be a negative pressure by refrigerating the storage case 11 by the Stirling refrigerator 15-Then, it may be possible to infiltrate the air through the sealing section between the opening 12 of the introduced case 13 and the lid member 14 into the introduced case 13 until the lid member 14 is opened by the receiver. It has a fear to infiltrate the air in the introduced case 13 from the sealing section of the window portion 19 and the safety valve 93.

In case where the air is infiltrated in the introduced case 13, the air is introduced to the concave portion 22 fixing the detection element 18 by the guide tray 21 to flow from the hole 23 into the introduced case 13. When the contaminant such as cells are mixed in the air, an optical property (light absorption property) of the detection element 18 changes by reacting cells with detection element 18. On the other hand, in case where cells are not infiltrated into the introduced case 13, an optical property of the detection element 18 results in no change.

The forwarder of place to forward transferring the sample issues a certificate of excellent quality as for the storage case 100 storing excellent quality and non-contaminated sample to cells. Further, it is possible to be confirmed to the carrier by that the forwarder is satisfied with the quality by the detection element 18 based on a request of the carrier. The receiver receiving the storage case 100 as transported is designed to measure the absorption spectrum of the detection element 18 with use of the detection device 30 at the time of receiving. Then, the receiver is designed to check an amount of peak shift, as compared with the absorption spectrum as transferred by the forwarder. As a result, in case where an amount of peak shift is less than or equal to a predetermined value, the sample contained in the storage case 100 is judged to be not contaminated. The receiver put temperature data from the temperature recording device 68 and can confirm whether the sample is kept to be a constant low temperature during transportation. Thus, the receiver can confirm the damages in the sample caused by an increase of holding temperature during transportation. Such an inspection result can be rapidly performed by personal computer or the like. The receiver can make a decision whether he receives the storage case 100 or not.

In such a way, when the storage case 100 is used, the detection element 18 can be readily inspected by the receiver of the sample without taking out the sample at the time of receiving. When the inspection result has no accident, the sample stored in a low-temperature area, in which cells etc. under the introduced case 13 cannot be bred, is confirmed not to be contaminated. Thus, the recipient can be satisfied in receiving the storage case 100, using the sample stored therein, and preserving it in a long period by shifting it another sample low-temperature storage case using the liquid nitrogen in a clean room. On the other hand, when the inspection result has an accident, the receipt of the storage case 100 is rejected, and the inspection result is noticed to the forwarder. As a result, it can be shown whether a judgment of receipt rejection is right or not.

The recipient can judge before receiving the sample whether it is damaged by reducing in quality based on an increase of temperature by checking the temperature data memorized in the temperature recording device 68 to be maintained in normal temperature concerning the sample temperature during transporting. The recipient can be satisfied with receiving the sample by using the above judgment together with the detection result as to whether the sample are received or not.

With the above storage case 100, an inner space of the storage case 100 is not exposed to the air on the ground that an optical method as an out of contact measure of the inspection of the detection element 18 can be used without taking out the sample from the storage case 100. Thus, it can be done to eliminate a risk to be contaminated by infiltration of cells etc. inside the storage case 100 at the time of receiving the storage case 100. Accordingly, it has no conflict in responsibility for sample contamination among the forwarder, the transporter, and the recipient as a conventional case, where the sample is judged to have been contaminated in future.

### (Second Embodiment)

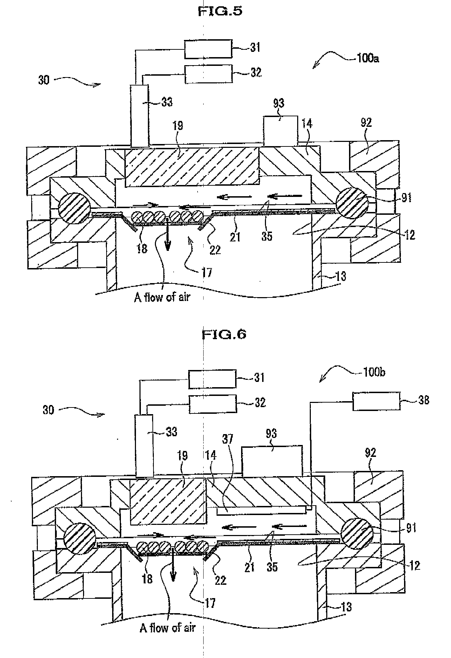

Figure 5 is a sectional view showing a schematic constitution of the storage case relating to a second embodiment of the present invention. Figure 5 shows in a same manner as Figure 2, and parts as not shown is the same as parts in Figure 1. In points different from the storage case relating to the first embodiment, the catalytic membrane 35 containing titanium oxide (TiO₂) etc. coated on a surface (upper surface) of the guide tray 21 to be a bactericidal action is used as a detection element holding member 17 and the window portion 19 as made of quarts glass etc. is provided in the lid member 14 by a wide opening area to radiate a plurality of ultraviolet rays (natural light or illumination light may be applied) on the catalytic membrane 35.

In this storage case 100a, reactive oxygen generates in a space between the lid member 14 and the guide tray 21 by radiating ultraviolet rays on the catalytic membrane 35. In case where the air containing cells etc. are infiltrated through a sealing section between the opening of the introduced case 13 and the lid member 14, contaminations of the sample can be prevented by putting cells etc. to death with use of the reactive oxygen. As a result, as cells etc. reacting with the detection element 18 are decreasing in number, a new effect to support the recipient with the sample to be not contaminated by the cells etc. can be obtained. In addition, it may be constituted to put cells etc. sticked to the catalytic membrane 35 to death by containing the substance such as silver (Ag) having bactericidal action as the catalytic membrane 35.

### (Third Embodiment)

Figure 6 is a sectional view showing a schematic constitution of the storage case relating to a third embodiment of the present invention. Figure 6 shows in a same manner with figure 2. The parts as not shown is the same parts shown in Figure 1. In different points between this storage case 100b and the storage 100 of the first embodiment, the catalytic membrane 35 containing titanium oxide (TiO₂) etc. coated on a surface (upper surface) of the guide tray 21 to be a bactericidal action is used as the detection element holding member 17 and an ultraviolet lamp 37 is provided under the lid member 14 for radiating ultraviolet rays on the catalytic membrane 35. A power source 38 for operating the ultraviolet rays can be fixed to an upper surface etc. of the lid member 14.

When the ultraviolet rays are radiated on the catalytic rays 35 by putting on the ultraviolet lamp 37, reactive oxygen generates in a space between the lid member 14 and the guide tray 21. Thus, in case where the air containing cells etc. are infiltrated through the sealing section between the opening of the introduced case 13 and the lid member 14, contamination of the sample can be prevented by putting cells etc. to death with use of reactive oxygen. In the storage case 100b, as the ultraviolet rays are forcibly radiated on the catalytic membrane 35, a higher bactericidal capacity can be obtained than the storage case 100a as above mentioned. Thus, a new effect to supply the recipient with the sample to be not contained by cells etc. can be obtained.

It may be put on all the time or put on intermittently. The ultraviolet lamp 37 may be put on only during night, in which the ultraviolet rays cannot be taken in from the outside environment. In this case, it may be preferable to make wide an opening area of the window portion 19 as well as the above-mentioned storage case 100a.

Although an embodiment of the present invention has been described in detail, the present invention is not limited to this kind of embodiment. For example, although the storage case 100 is constituted to house the sample storage case S in the storage case 11, it may be constituted directly to house the sample in a hole of the storage case 11. In this case, washing etc. after taking out the sample can be easily done by coating an inner circumferential surface of the hole 61 with fluoride plastic etc.

Although it has been described about a case where the biomolecule etc. 26 detecting cells etc. as the detection element 18 is used and a method for measuring a change of absorption spectrum of the detection element 18 is used, the detection element and an inspection method of the detection element are not limited to the above.

For example, with a detection element illuminating by reacting with the biomolecule etc. 26, a method for measuring an emission intensify in out-of-contact manner may be used. In this case, the surfactant is contained by dissolution in a moisture of polymer 27 having water-holding capacity as shown in Figure 3. As a result, substance inside the cells etc. and the biomolecule etc. 26 are effectively reacted in a chemical reaction by dissolving the cell membrane of cells etc. sticked to the polymer 27. In such a way, a luminous efficacy can be remarkably improved.

A magnetic marker having magnetic particles in the biomolecule etc. 26 can be used as the detection element, and a method for measuring a change of residual flux of the magnetic particles in out of contact manner can be also used. In case of using such magnetic method, the window portion 19 may be constituted to be made, for example, of the material having permeability flux.

Although a mechanical refrigerator using He gas (Helium gas) as working fluid has been used in the above embodiment, it is not limited to this mechanical refrigerator, but an electronic refrigerating means such as Peltier device can be used.

### (Fourth Embodiment)

Embodiment in use of organism transportation supporting system Figure 4 shows an example of organism, transportation used in the organism transportation supporting system relating to the fourth embodiment of the present invention.

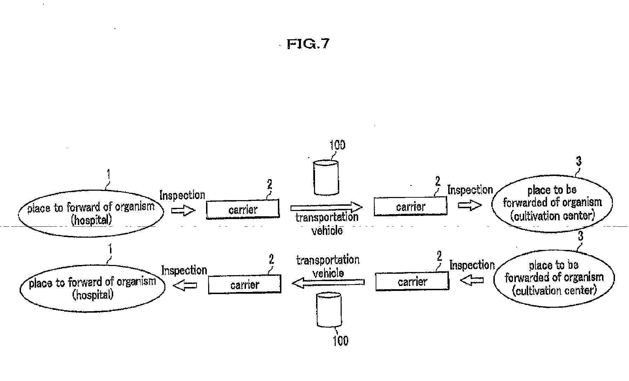

At first, in a flow of upper stage of Figure 7. a hospital 1 is a place to forward and, for example, skin cell (organism) of patient is transported to a cultivation center 3 as a place to forward the organism on request of a carrier 2. The organism is stored in the sample low-temperature storage case 100, and transported by a transportation vehicle of the carrier 2 every the sample low-temperature storage case 100. Prior to being transported by the carrier 2, it is inspected in a state housing the organism in the sample low-temperature storage case whether the detection element housed in the sample low-temperature storage case 100 reacts to contaminant or not. With reaction to contaminant in the inspection, it is judged that the detection element 18 and the organism have been already contaminated. Thus, it results in the stop of transportation. On the other hand, with no reaction to contamination in the inspection, it is judged that the organism is not contaminated at the time of storing the organism in the sample low-temperature storage case 100. Thus, the hospital 1 and the carrier 2 can confirm a preferable storage of the organism. After this confirmation, the carrier 2 transports the sample low-temperature storage case 100 housing the organism to the cultivation center 3 as a place to be forwarded the organism.

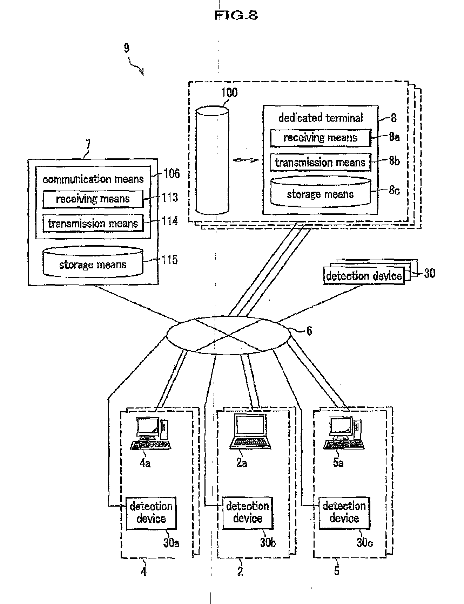

After the organism has been transported by the carrier 2, it is inspected by the detection device 30 (referring to Figure 8) in a condition housing the organism in the sample low-temperature storage case 100 whether the detection element 18 housed in the sample low-temperature storage case 100 reacts to contaminant or not. With the reaction to contaminant in the inspection, it is judged that the detection element 18 and the organism are contaminated during transporting. Thus, the cultivation to induced pluripotent stem (iPS) cell, for example, of skin cells in the cultivation center 3 is forced to stop. On the other hand, no reaction to contaminant in the inspection, it is judged that the organism is not contaminated during transporting. The carrier 2 and the cultivation center 3 can confirm a preferable transportation. After this confirmation, the organism such as skin cells is taken out from the sample low-temperature storage case 100 to cultivate the skin cells in the induced pluripotent stem (iPS) cell.

Although the above inspection is done twice before and after transporting, the inspection before transporting may be omitted as the case may be. In this case, the inspection after transporting is done on the subject of not only contaminant during transporting, but also contaminant with organism storage to the storage case 100 before transporting. In case where the inspection result after transporting has no reaction to the substance of contaminant, it is judged that the cultivation in the cultivation center 3 may be put into practice.

Next, in a flow of lower stage of Figure 7, the cultivation center 3 is a place to forward, and the induced pluripotent stem (iPS) cell cultivating, for example, skin cell of patients is transported by the carrier 2 to the hospital 1 being a place to be forwarded. In the hospital 1, the induced pluripotent stem (iPS) cell is used to cure patients. Although the hospital 1 is a place to forward the organism and the cultivation center 3 is a place to be forwarded in the above transporting, the cultivation center 3 is a place to forward and the hospital 1 is a place to be forwarded in this transporting. In this way, the hospital 1 and the cultivation center 3 may be a place to forward or a place to be forwarded. A method for transporting, inspecting, or the like is done in a same manner as the above transporting from a place to forward to a place to be forwarded of the organism, except that the hospital 1 and the cultivation center 3 are mutually exchanged.

Figure 8 shows a constitutional view of organism transportation supporting system 9 relating to a fourth embodiment of the present invention. The organism transportation supporting system 9 is designed to match the transaction among the place to forward 4, the carrier 2, and the place to be forwarded. It is provided with a server 7 for preferably transferring or receiving the organism, a plurality of terminals of place to forward 4a used in a plurality of place to be forwarded 4 such as hospitals asking for transporting the organism, a plurality of terminals of carrier 2a used by a plurality of the carrier 2 transporting the organism, a plurality of terminals of place to forward 5a used in the place to be forwarded 5 such as the cultivation center 3, for example, processing the organism. The servers 7 and their terminals 2a, 4a, 5a are constituted to be mutually connected to communicate through a communication line 6 provided for the public such as an internet or a telephone line (including telephone line of both a fixed phone and portable phone)- The organism transportation supporting system 9 is provided with a plurality of sample low-temperature storage case 100, a dedicated terminal 8 provided in each sample low-temperature storage case 100, and the inspection device 30 inspecting the sample low-temperature storage case 100. The storage case 100 is provided with an acceleration sensor for enabling an impact or fall during transporting to inspect. The acceleration data is designed to record in a temperature recording device 68 together with the temperature data. At least one of the storage case 100 and the dedicated terminal 8 is provided with GPS to record a positional data measured by GPS and temperature data in the temperature recording device 68.

The dedicated terminal 8 has a receiving means 8a for receiving the identification data of the storage case 100, the temperature data, the acceleration data, and the positional data in a short-distance wireless system. The dedicated terminal 8 has a transmission means 8b and a storage means 8c to memorize the identification data, the temperature data, the acceleration data, and the positional data as received. The transmission means 8b is connected through the communication line 6 to the server 7 to transfer the identification data of the storage case 100 as memorized, the temperature data, the acceleration data, and the positional data to the server 7.

A plurality of the inspection devices 30 are provided near a plurality of storage case 100, as it is inspected on the subject of the storage case 100. However, as the storage case 100 moves with transporting, it may be provided in the place to forward 4 like the inspection device 30a, carried by the carrier 2 like the inspection device 30b, and provided on the place to be forwarded 5 like the inspection device 30c. The inspection devices 30, 30a, 30b, 30c are respectively connected through the communication line 6 to the server 7, thus to transfer the inspection result obtained by the inspection through the communication line 6 to the server 7.

As later described in detail, the server 7 includes a communication means 106 having the receiving means 113 and the transmission, means 114, and a storage means 115. The receiving means 113 receives the inspection result, the identification data of the storage case 100, the temperature data, the acceleration data, and the positional data to be memorized by the storage means 116. The transmission means 114 is connected to at least two terminals among the terminal of place to forward 4a, the terminal of carrier 2a, and the terminal of place to be forwarded 5a to transfer to terminals 4a, 2a, 5a connecting to the inspection result, the identification data of the storage case 100, the temperature data, the acceleration data, and the positional data. As the inspection data, the identification data of the storage case 100, the temperature data, the acceleration data, and the positional data is memorized in the server 7 (storage means 115) without passing through the terminal of place to forward 4a, the terminal of carrier 2a, and the terminal of place to be forwarded 5a, it is difficult to falsify the inspection result or the like by the carrier 2 and the like. As the inspection result or the like is transferred to at least two terminals 4a, 2a, 5a and obtained by at least two among the place to forward 4, the carrier 2, and the place to be forwarded 5, consensus development of opinion on the subject of no contamination (good condition without contamination) in accordance with the inspection result or the like can be easily done among at least two parties. According to the consensus development of opinion between the above two or among the above three in no contamination, that is, good condition without contamination, good condition without contamination is mutually confirmed.

Although the detail thereof will be described, transport and cultivation data concerning an organism processing condition of the transportation of the organism, the cultivation of the organism or the like transferred from the terminal of place to forward 4a, and contract data concerning a transportation and processing contract transferred from the terminal of carrier 2a and the terminal of place to be forwarded 5a are received by the receiving means 113 through the communication line 6. After matching between the transportation & the cultivation data and contract data, a result of the matching is transferred by the transmission means 114 to the terminal of place to forward 4a and the terminal of carrier 2a.

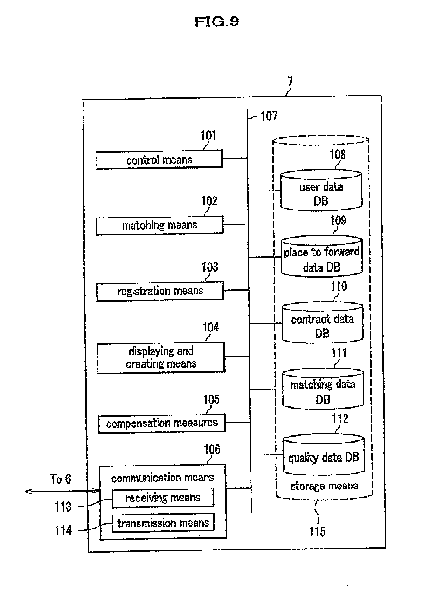

Figure 9 shows a block diagram of the server 7. The server 7 includes a control means 101 to supervise and control the server 7, a matching means 102 to do a matching process between the transportation & cultivation data and contract data, a registration means 103 to register data transferred from each terminal 4a, 2a, or 5a in each DB (database) 108 to 112, a displaying and creating means 104 to make various kinds of data input displays etc. transferred to each terminal 4a, 2a, or 5a and output them as a HTML type of file, a compensation measures 105 correcting transportation & cultivation data and contract data establishing the matching and regulating a detailed condition, for example, date of receiving and forwarding, and a communication means 106 as an interface communicating through each terminal 4a, 2a, 5a, the dedicated terminal 8, and the detection device 30, 30a, 30b, 30c.

The storage means 115 inside the server 7 includes a user data DB 108 registering user data as data concerning the hospital 1, the carrier 2, and the cultivation center 3 participating in the organism transportation supporting system 9, a place to forward data DB 109 registering the transportation & cultivation data concerning the organism processing condition of the transportation of the organism, the cultivation of the organism, or the like transferred from the terminal of place to forward 4a, a contract data DB 110 registering the contract data concerning the transportation & processing contract transferred from the terminal of carrier 2a and the terminal of place to be forwarded 5a, a matching data DAB 111 registering the matching data as a result of matching process by the matching means 102, and a quality data DB 112 registering the inspection result (quality data) transferred from the detection device 30, 30a, 30b, 30c, the transportation environmental data such as temperature (data), acceleration (data), position (data), or the like during transporting transferred from the dedicated terminal 8, and the situation just before transferring the organism transferred from the terminal of place to forward 4a (terminal of place to be forwarded 5a) and the quality data or the like of the processing terminated body. These various means 101 to 106 and each DB 108 to 112 are mutually connected by an internal bus 107, respectively.

The server 7 is materialized by a computer for server constituted by CPU (Central Processing Unit), RAM (Random Access Memory), harddisk drive, network card, or the like. The control means 101, the matching means 102, the registration means 103, the displaying and creating means 104, and the compensation measures 105 are realized by developing programs registered in the harddisk drive on RAM and running the CPU. The communication means 106 is equivalent to a network card. Furthermore, the user data DB 108, the place to forward data DB 109, the contract data DB 110, the matching data DB 111, and the quality data DB 112 are allocated in the separated memory area, respectively.

The terminal of place to forward 4a, the terminal of carrier 2a, and the terminal of place to be forwarded 5a are respectively terminal devices for mutually communicating through the communication line 6 to the server 7. The terminal devices are realized, for example, by a computer designed to communicate through a Web browser browsing files typed of HTML and a network card. The terminal of carrier 2a can be loaded on a truck to transfer or receive data in a state loaded on a truck, and may be used as the dedicated terminal 8 (Referring to Figure 8).

The communication line 6 can be used, for example, for internet or network based on VPN (Virtual Private Network), dedicated line, or the like in consideration of the security. In case where the communication line 6 is used for Internet, it is preferable to communicate securely with use of well-known encryption technology.

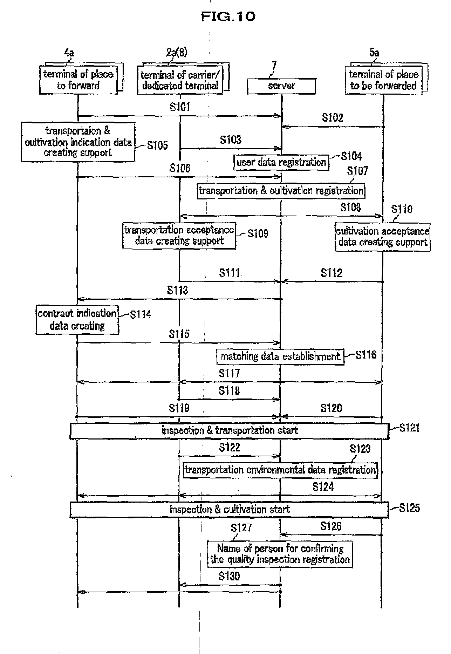

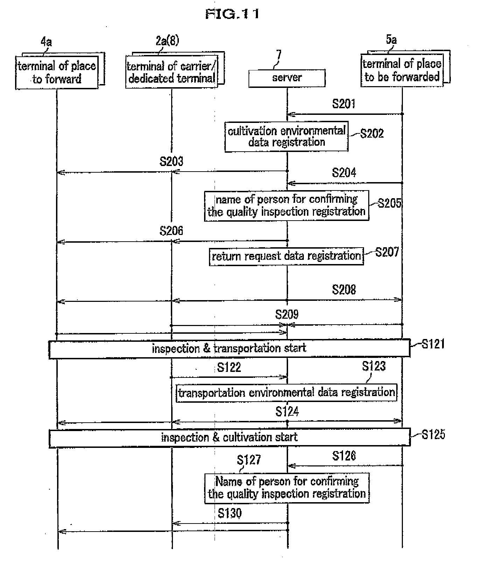

Figure 10 and 11 is a sequential view showing a step of organism transportation with use of the organism transportation supporting system 9. In Figure 10 and 11, a side of arrow's base represents a subject of implementation and a side of arrow's tip represents an object of implementation.

In the beginning of organism transportation using the organism transportation supporting system 9, the hospital 1 as the place to forward 4, the carrier 2, and the cultivation center 3 as the place to be forwarded 5 transfer the user data having the prescribed items such as user name, address, and telephone number to a manager of the server 7 with use of the terminal of place to forward 4a, the terminal of carrier 2a, and the terminal of place to be forwarded 5a (S101(user data transmission), S102(user data transmission), S103(user data transmission)) and apply a request for using the organism transportation supporting system 9. A request for users registration is electronically applied by transferring the user data through each terminal 4a, 2a, 5a or the communication line 6. The transfer of the user data may be replaced by transferring a request sheet entering the user data to the above manager. The manager of the server 7 examines person who desire to use this system. Then, when there are no problems in the examination, each user data is registered in the user data DB 108 (S104(user data registration)). User name, residence or address, telephone number, facsimile number, person who takes charge in, or the like are registered corresponding to the user ID (login user name) as uniquely designated by the control means 101 to each user. A user password is arbitrarily designated in each user data. When each user makes an access to the organism transportation supporting system 9, users are designed to use by a login into the organism transportation supporting system 9 after making an authentication using the user ID and the user password.

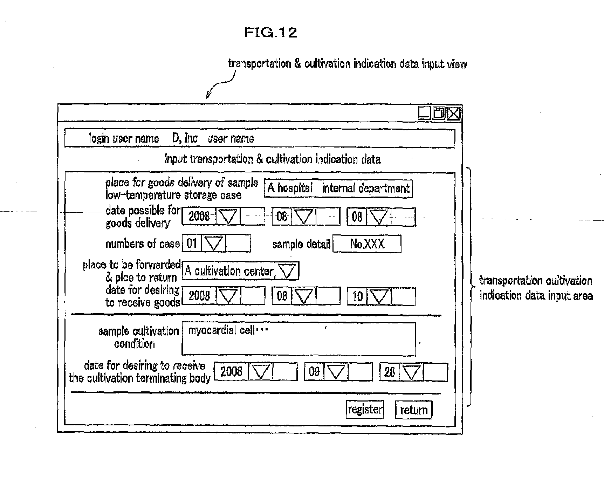

When the user registration is finishes, the place to forward 4 such as hospital 1 requests for displaying an input view of transportation and cultivation indication data as shown in Figure 12 made by the displaying and creating means 104 from the terminal of place to forward 4a. The input view of transportation and cultivation indication data is displayed in the terminals of place to forward 4a to the control means 101, and the place to forward 4 is promoted to display "Input the transportation and cultivation indication data". Then, the place of goods delivery such as "A hospital - internal department" can be definitely inputted in a textbox corresponding to "Place of goods delivery transporting sample low-temperature storage case" shown in an input area of transportation and cultivation indication data. As the same way as the above, "date possible for forwarding" as the place to forward 4 prepared, "Numbers of case" of the case housing the organism, "Detail of sample" as the case ID housing the organism, "Place to be forwarded and Place to be forwarded" showing the place to be forwarded, "Date for desiring to receive goods" of the case housing the organism arriving at the place to be forwarded, and "Sample cultivation condition" requested by the hospital to the cultivation center, "Date for desiring to receive cultivation completion" are respectively described in textbox and listbox corresponding thereto. The transportation commission price, the cultivation commission price, and the like may be described, and the transportation and cultivation indication data may be inputted. Then, the terminal of place to forward 4a supplies the place to forward 4 with the support to make easily the cultivation indication data (S105(transportation & cultivation indication data creating support)) by entering the indication in the textbox and listbox.

Next, the terminal of place to forward 4a transfers the transportation and cultivation indication data through the communication line 6 to the receiving means 113 of the server 7 (S106(transportation & cultivation indication data creating support)). The registration means 103 of the server 7 registers the transportation and cultivation indication data as received in the place to forward data DB 109 (S107(transportation & cultivation data registration)). The place to forward 4 clicks a "Register" button in order to establish the transportation and cultivation indication data as inputted and starts the transmission. In case where a work for making the forwarding and cultivation indication data is stopped, a "Return' button is clicked.

The control means 101 of the server 7 is designed to read out the transportation and cultivation indication data from the place to forward data DB 109, and transfer the transportation and cultivation indication data through the communication line 6 to a plurality of the terminals of carrier 2a as registered and A cultivation center (place to be forwarded) designated as a place to be forwarded 5a in the transportation and cultivation indication data with use of the transmission means 114. (S108(transportation & cultivation indication data transmission))

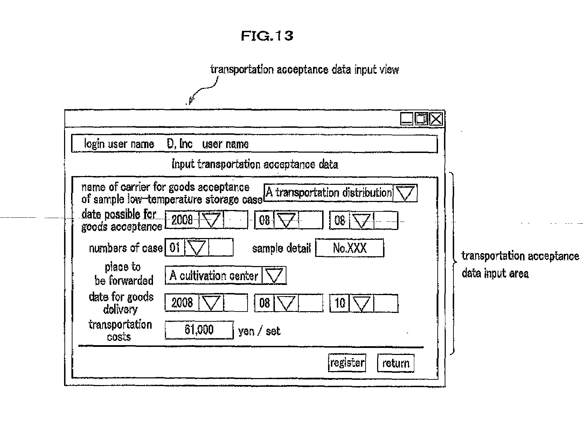

When the terminal of carrier 2a receives the transportation and cultivation indication data, the terminal of carrier 2a is designed to request through the communication line 6 and the communication means 106 to the control means 101 in order to show an input view of the transportation receiving data as shown in Figure 13 made by the displaying and creating means 104. The input view of transportation acceptance data is displayed in in the terminal of carrier 2a as shown in Figure 13. The carrier 2 is promoted to display "Input transportation acceptance data" and "A transportation distribution" etc. can be definitely inputted as a name of carriers in textbox corresponding to " carrier name of acceptance of sample low-temperature storage case" displayed in an input area of the transportation acceptance data. As the same way as the above, "Date possible for forwarding" to be changeable for the designated date of the place to forward 4 in accordance with the transportation and cultivation indication data, "Numbers of case" based on the transportation and cultivation indication data, "Detail of sample" based on the transportation and cultivation indication data, "Place to be forwarded" based on the place to be forwarded and place to be returned of the transportation and cultivation indication data, "Date of delivery" to be changeable for data based on the date for desiring to receive goods of the transportation and cultivation indication data, and "Transportation costs" as the price estimated by the carrier 2 are respectively shown in textbox and listbox corresponding thereto. The terminal of carrier 2a is designed to supply the carrier 2 with the support to make easily the transportation acceptance data (S109(transportation acceptance data creating support)) by entering the acceptance data in the textbox and listbox.

Next, the terminal of carrier 2a transfers the transportation acceptance data through the communication line 6 to the receiving means 113 of the server 7. (S111(transportation acceptance data creating support)) The registration means 103 of the server 7 receives the transportation acceptance data as received in the contract data DB 110. The carrier 2 clicks the "Registration" button in order to establish the transportation acceptance data as inputted and start the transmission. In case where the work for making the transportation acceptance data stops, it is supposed to click the "return" button.

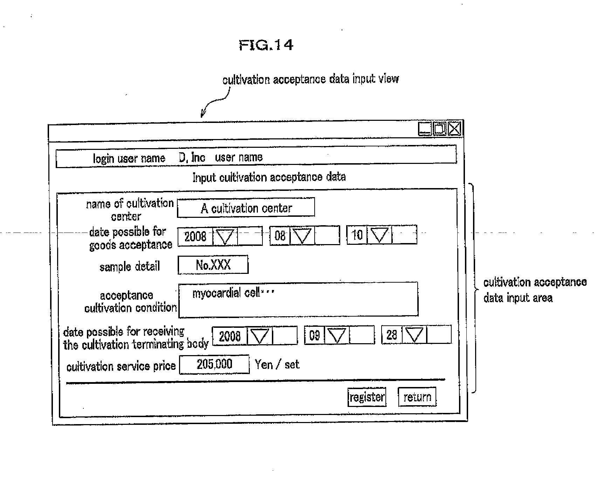

When the terminal of place to be forwarded 5a receives the transportation and cultivation indication data, the terminal of place to be forwarded 5a requests for displaying the input view of the cultivation acceptance data,as shown in Figure 14, made by the displaying and creating means 104. The input view of the cultivation acceptance data is shown as shown in Figure 14 in the terminal of place to be forwarded 5a. The place to be forwarded 5 is promoted by a display of "Input the cultivation acceptance data". Then, it can be made through the communication line 6 and the communication means 106 to input "A cultivation center" as a cultivation name in textbox corresponding to "the cultivation center name" or the like as shown in an input area of a cultivation acceptance data. As the same way as the above, "Date possible for receiving goods" changeable for the date designated by the place to forward 4 based on the transportation and cultivation indication data, "Detail of sample" based on the transportation and cultivation indication data, "Acceptance cultivation condition", "Date possible for forwarding cultivation completion" changeable for the date based on the date for desiring to receive cultivation completion of the transportation and cultivation indication data, and "Cultivation service price" as a price estimated by the cultivation center 3 are respectively shown in textbox and listbox corresponding thereto. The terminal of place to be forwarded 5a supplies the place to be forwarded 5 with the support to make easily the transportation acceptance data (S110(cultivation acceptance data creating support)) by entering the cultivation data in the textbox and listbox.

Next, the terminal of place to be forwarded 5a transfers the cultivation acceptance data through the communication line 6 to the receiving means 113 of the server 7 (S112(cultivation acceptance data transmission)). The registration means 103 of the server 7 registers the cultivation acceptance data as received in the contract data DB 110. The place to be forwarded 5 clicks the "Registration" button, when the cultivation acceptance data as inputted is established and the transmission is initiated. In case where a work for making the cultivation acceptance data stops, it is supposed to click "Return" button.

### (Matching process)

Next, the matching means 102 extracts the forwarding and cultivation indication data as registered, transportation acceptance data, forwarding and cultivation indication data matching, for example, various kinds of schedules between the transportation acceptance data and the cultivation acceptance data, the transportation acceptance data, and the cultivation acceptance data. Then, the matching means 102 makes the matching data (including transportation matching data and cultivation matching data) with use of various kinds of schedules as matched in the above, thus to register it in the matching data DB 111.

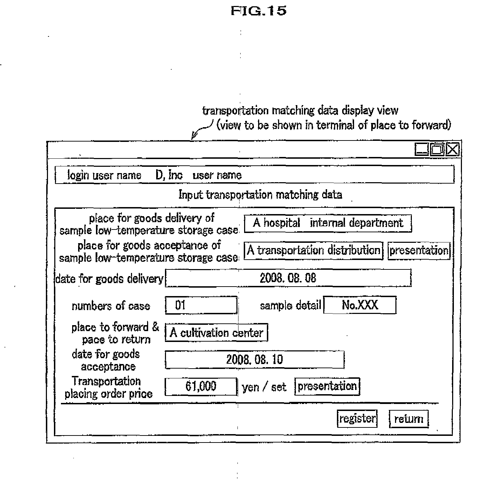

The displaying and creating means 104 is constituted to make a display view of the transportation matching data as shown in Figure 15 in accordance with the transportation matching data. Then, the control means 101 transfers them to the terminal of place to forward 4a with use of the transmission means 114 (S113(matching data transmission)). The display view of transportation matching data as shown in Figure 15 is shown in the terminal of place to forward 4a. The place to forward 4 is promoted to show the display "Input the transportation matching data". If necessary for changes thereof, "Carrier name of acceptance of sample low-temperature storage case" and "Transportation placing order price" can be inputted to change the description in textbox corresponding thereto by clicking a "Show" button. In spite of changes, in accordance with clicking the "Register" button by the place to be forwarded 5, the transportation matching data is established and the contract indication data is made in the terminal of place to forward 4a (S114(contract indication data creating)) to transfer to the server 7 (S115(contract indication data transmission)). In case of no change, the content defined by the transportation notching data becomes the content defined by the transportation contract between the place to forward 4 and the carrier 2.

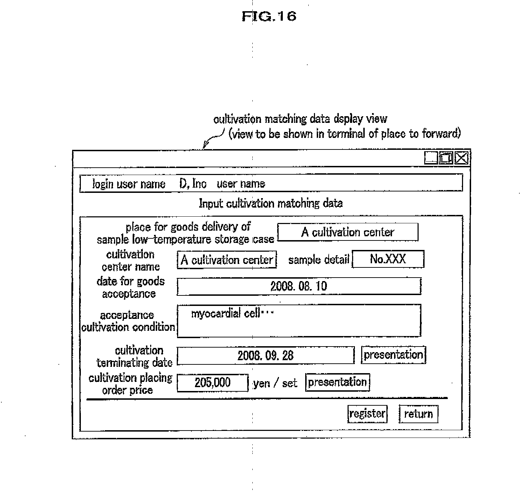

The displaying and creating means 104 is constituted to make a display view of the cultivation matching data as shown in Figure 16 in accordance with the cultivation matching data at Step 116, and the control means 101 transfers to the terminal of place to forward 4a with use of the transmission means 114. The display view of the cultivation matching data as shown in Figure 16 is displayed. The place to forward 4 is promoted to show a display of "Input the cultivation matching data". If necessary for changes, "Date of cultivation completion" and "Transportation and placing order price" can be inputted to change the description in textbox corresponding thereto by clicking the "Show" button. In spite of changes, in accordance with clicking the "Register" button by the place to be forwarded 5, the transportation matching data is established and the contract indication data is made in the terminal of place to forward 4a (S116(matching data establishment)), thus to transfer to the server 7. In case of no changes, the content defined by the cultivation matching data becomes the content defined by the cultivation contract between the place to forward 4 and the place to be forwarded 5.

### (Placing order and Placing order process)

In case where the above change took plate, the content of change is judged to be right or not by the compensation measures 105 of the server 7. When it is right, the content of change is considered to be a matching data, and when it is not right, the content of change is deleted and/or changed, and amend the matching data in order to be in an appropriate extent. Then, the matching data as amended is registered in the matching data DB 111, and then the content of contract (matching data) will be established.

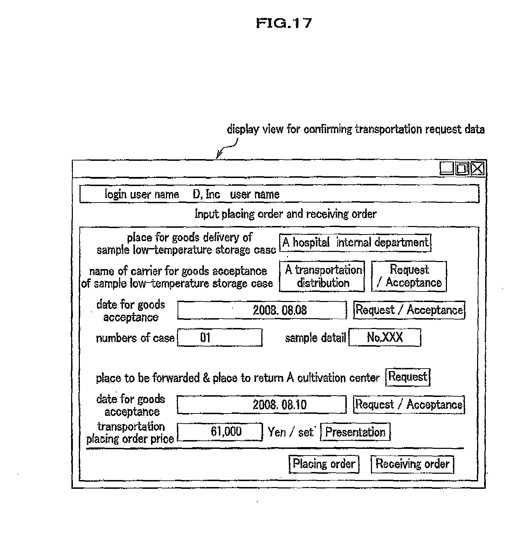

The displaying and creating means 104 is constituted to make a display view of transportation request data as shown in Figure 17 in accordance with a transportation matching data of the matching data as established at S116(matching data establishment)- The control means 101 transfers to the terminal of place to forward 4a and the terminal of carrier 2a with use of the transmission means 114, and supports to conclude with so-called transportation cultivation contract. (S117(transportation cultivation contract conclusion support)) As a result of the transmission, a display view for confirming the transportation request data as shown in Figure 17 is displayed in the terminal of place to forward 4a. The place to forward 4 is promoted to show a display of "Input placing order and receiving order". A signal of placing order is transferred from the terminal of place to forward 4a to the server 7 by clicking a "Placing order" button. Thus, the placing order as a contract is done. A display view for confirming transportation request data as shown in Figure 17 is displayed in the terminal of carrier 2a. The carrier 2 is promoted to show a display of "Input a placing order and/or a receiving order" to transfer a signal of receiving order from the terminal of carrier 2a to the server 7 (S118(receiving order signal transmission)) by clicking a "Receiving order" button. Thus, the receiving order as a contract can be done. As a result, the server 7 can be considered to be concluded with a transportation contract by receiving a signal of placing order and all signal of receiving order.

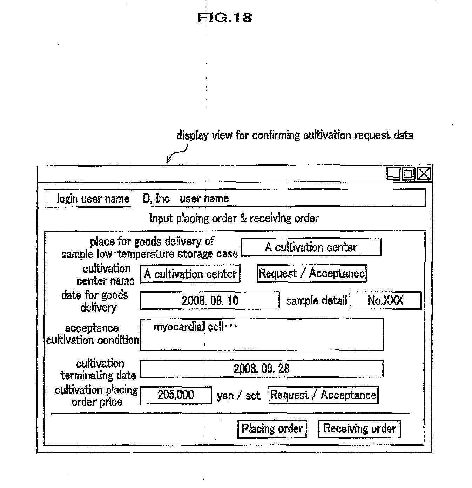

The displaying and creating means 104 is constituted to make a display view for confirming the cultivation request data as shown in Figure 18 in accordance with the cultivation matching data of the matching data as established. The control means 101 transfers to the terminal of place to forward 4a and the terminal of place to be forwarded 5a with use of the transmission means 114. As a result of transmission, the display view for confirming the cultivation request data as shown in Figure 18 is displayed in the terminal of place to forward 4a. The place to forward 4 is promoted to show a display of "Input a placing order and/or a receiving order" to transfer a signal of placing order from the terminal to forward 4a to the server 7 (S119(placing order signal transmission)), thus to place an order as a contract. A display view for confirming the cultivation request data as shown in Figure 18 is displayed in the terminal of place to be forwarded 5a. The place to be forwarded 5 is promoted to show a display of "Input a placing order and/or a receiving order" to transfer a signal of receiving order from the terminal of place to be forwarded 5a to the server 7 (S130(receiving order signal transmission)), thus to receive an order as a contract. Thus, the server 7 can be considered to conclude with a cultivation contract by receiving a signal of placing order and a signal of receiving orders. As above mentioned, a process of a placing order and a receiving order is terminated.

### (Inspection and transportation process)

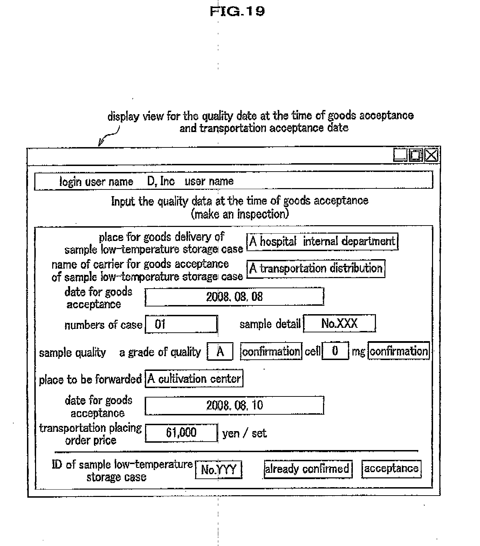

The displaying and creating means 104 is constituted to make a display view of quality data at the time of receiving goods and transportation acceptance data as shown in Figure 19 at the date as transported in accordance with transportation matching data of the matching data as the contract concluded with, and the control means 101 transfers to the terminal of place to forward 4a, the terminal of carrier 2a, and the terminal of place to be forwarded 5a. The terminal of place to forward 4a, the terminal of carrier 2a, and the terminal of place to be forwarded 5a show a display view of quality data at the time of receiving goods and transportation acceptance data. The place to forward 4 and the carrier 2 are promoted to show a display of "Input the quality data at the time of receiving goods (make inspection)" and it is inspected on the spot whether it is contaminated by cells or not, with use of the detection element 18 for inspecting contaminant such as cells as infiltrated. (S121(inspection & transportation start)) The carrier 2 or the place to forward 4 is inspected by the detection device 30, 30a, 30b. The result of the inspection is transferred from the detection device 30, 30a, 30b through the communication line 6 to the server 7. Then, the result of inspection is memorized in the quality data DB 112 of the storage means 115.

The result of inspection is transferred to the terminal of place to forward 4a, the terminal of carrier 2a, and the terminal of place to be forwarded 5a with use of the transmission means 114. In the terminal of place to forward 4a, the terminal of carrier 2a, and the terminal of place to be forwarded 5a, the result of inspection is displayed as a grade of quality and a mass of cell as to "sample quality" on a display view of the quality data at the time of receiving goods and transportation acceptance data. Then, a record for receiving the quality confirmation signal at the server 7 is transferred to the server 7 by clicking a "Confirmation" button corresponding to each of a grade of quality and a mass of cell in the place to forward 4, the carrier 2, and the place to be forwarded 5, in each of the terminal of place to forward 4a, the terminal of carrier 2a, and the terminal of place to be forwarded 5a. The place to forward 4, the carrier 2, and the place to be forwarded 5 are mutually confirmed in quality of the organism by the record for receiving the quality confirmation signal at the server 7. The control means 101 of the server 7 shows a mark of "Already guaranteed" on a display view of the quality data at the time of receiving goods and the transportation acceptance data in accordance with the record for receiving the quality confirmation signal signal. When a mark of "Already guaranteed" is shown, the carrier 2 is able to transport the storage case 100 to click an "Acceptance" button, receive the storage case 100 from the place to forward 4, and start the transportation. (S121(inspection & transportation start)) In addition, a sample low-temperature storage transportation case ID is enabled to be inputted before and after clicking the "Acceptance" button. An input into textbox or an input by a bar-code reader comes to be possible. The sample low-temperature storage transportation case ID is inputted from the terminal of place to forward 4a or the terminal of carrier 2a to transfer to the server 7. The ID is registered in the matching data DB 111, as corresponded to the detail of sample as organism ID.

### (Transportation environmental data processing)

When the transportation starts (S121(inspection & transportation start)), the dedicated terminal 8 of the storage case 100 measures date (Month, Day, Time, Minute) by a built-in timer, measure a moving point (Position) by a built-in GPS, measures the temperature at the time of transportation by a built-in thermometer, receives with use of the receiving a temperature of case measured by a temperature measuring element 67 of the storage case 100 with use of the receiving means 8a, and receipt of an ID of the storage case 100 from the storage case 100. The dedicated terminal 8 memorizes the date (Month, Date, Time, Minute), the moving point (Position), the temperature, the storage temperature, the acceleration, and the ID of the storage case 100 as a transportation environmental data in the storage means 8c, and transfers to the server 7 with use of the transmission means 8b. (S122(transportation environmental data transmission)) The measurement, receipt, and transmission are repeatedly done at a prescribed time interval. In case where a measured value of the storage case or the like is beyond the prescribed threshold, the measured value may be received and transmitted together with the date measured at the same time.

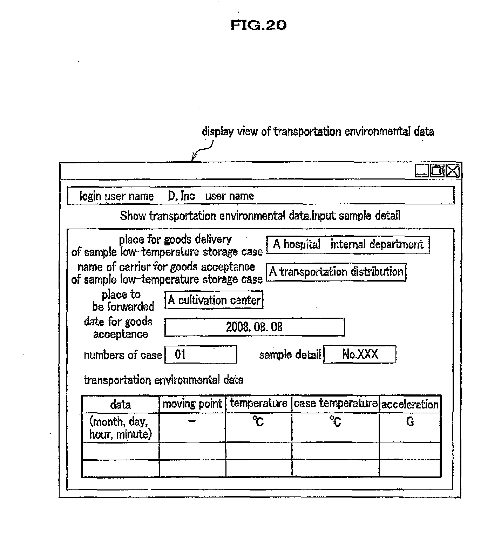

The server 7 receives the transportation environmental data with use of the receiving means 113. The registration means 103 of the server 7 registers the transportation environmental data in the quality data DB 112. (S123(transportation environmental data registration)) The displaying and creating means 104 of the server 7 makes a display view of the transportation environmental data as shown in Figure 20 in accordance with the transportation environment data. In response to the terminal of place to forward 4a, the terminal of carrier 2a, and the terminal of place to be forwarded 5a, the control means 101 transfers a display view of transportation environmental data to the terminal of place to forward 4a, the terminal of carrier 2a, and the terminal of place to be forwarded 5a with use of the transmission means 114. As a result of the transmission, a display view of the transportation environmental data as shown in Figure 20 is shown in the terminal of place to forward 4a, the terminal of carrier 2a, and the terminal of place to be forwarded 5a. The place to forward 4, the carrier 2, and the place to be forwarded 5 are promoted by a display of "Display Transportation environmental data is shown. Input the sample detail (ID)" to input the detail of sample (ID) for desiring to see in textbox of the sample detail. Thus, the sample detail is transferred from the terminal of place to forward 4a, the terminal of carrier 2a, and the terminal of place to be forwarded 5a to the server 7. The control means 101 of the server 7 is corresponded to the sample detail as received to extract the ID of the storage case 100 storing the organism in reality, extract the transportation environmental data (Date (Month, Date, Time, Minute), the Moving point (Position), temperature, storage temperature, and acceleration) corresponded to the ID of the storage case 100 as extracted, and transfer to the terminal of place to forward 4a, the terminal of carrier 2a, and the terminal of place to be forwarded 5a as the sample detail (ID) inputted. (S124(transportation environmental data transmission)) The terminal of place to forward 4a, the terminal of carrier 2a, and the terminal of place to be forwarded 5a receive the transportation environmental data and show a display view of transportation environmental data as shown in Figure 20. The place to forward 4, the carrier 2, and the place to be forwarded 5 can inspect the transportation environmental data at the terminals 4a, 2a, 5a, respectively. Then, a share of data in common can be realized. The consensus development of opinion in quality guarantee of organism can be smoothly done at the time of transferring the organism from the carrier 2 as later described to the place to be forwarded 5. Although a display in Figure 20 has been described as PUSH type, a display of PULL type may be made to respond to a request from the terminal of place to be forwarded 5a.

### (Receiving and inspection process at place to be forwarded)

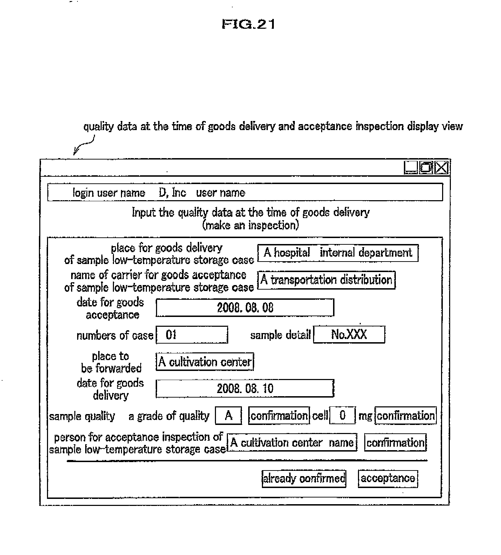

The displaying and creating means 104 is constituted to make a display view of quality data at the time of goods delivery and the receipt and inspection as shown in Figure 21 in accordance with the transportation matching data of the matching data as a contract concluded with, at the date of goods delivery to the place to be forwarded 5. The control means 101 transfers to the terminal of place to forward 4a. the terminal of carrier 2a, and the terminal of place to be forwarded 5a with use of the transmission means 114. A grade of quality of the sample quality or the like is memorized in the storage means 115 of the server 7 through the terminal of place to forward 4a by the place to forward 4 such as A cultivation center before the date of goods delivery. The terminal of place to forward 4a, the terminal of carrier 2a, and the terminal of place to be forwarded 5a show a display view of the quality data at the time of goods delivery and the receipt & inspection. The carrier 2 and the place to be forwarded 5 are promoted to show a display view of "input the quality data at the time of goods delivery (make an inspection)" at the time of receiving and forwarding the storage case 100, and to inspect whether it is contaminated on the spot by cells with use of the detection element 18 for inspecting the contaminant such as cells as infiltrated. (S125(inspection & cultivation start)) The inspection is done by the carrier 2 and the place to be forwarded 5 with use of the detection device 30, 30b, 30c. A result of inspection is transferred from the detection device 30, 30b, 30c through the communication line 6. The result of inspection is memorized in the quality data DB 112 of the storage means 115.

The result of inspection is transferred by the control means 101 to the terminal of place to forward 4a, the terminal of carrier 2a, and the terminal of place to be forwarded 5a with use of the transmission means 114. The result of inspection is displayed as a grade of quality and a mass of cell in "sample quality" displayed on a view of the quality data at the time of goods delivery and receipt & inspection by the terminal of place to forward 4a, the terminal of carrier 2a, and the terminal of place to be forwarded 5a-The quality confirmation signal is transferred to the server 7 by clicking "Confirmation" button corresponding to each of the grade of quality and the mass of cell. A quality of organism is mutually confirmed by the place to forward 4, the carrier 2, and the place to be forwarded 5 according to a record for receiving the quality confirming signal at the server 7. It is extremely important to confirm a quality of organism one another at the time of the receipt & inspection service of the organism to be easily deteriorated. In particular, a person receiving and inspecting the sample low-temperature storage case existing in the place to forward 5 inputs a name in the corresponding textbox and click a "Confirmation" button in order to express a meaning as already inspected. The name as inputted is transferred from the terminal of place to be forwarded 5a to the server 7 (S126(name of person for confirming the quality inspection transmission)), and registered in the quality data DB 112 of the server 7. (S127(name of person for confirming the quality inspection registration)) Further, the name is transferred from the server 7 to the terminal of place to forward 4a and the terminal of carrier 2a (5130(name of person for confirming the quality inspection transmission)), and displayed as a person for receiving & inspecting the sample low-tempexature storage case on a view of quality data at the time of goods delivery and receipt and inspection.

The control means 101 of the server 7 shows a display of "Already guaranteed" on a display of quality data at the time of goods delivery and receipt & inspection in accordance with a record for receiving the quality assurance signal. When the display of "Already confirmed" is displayed, the place to be forwarded 5 is possible to receive the storage case 100, and click an "Acceptance" button to start the cultivation service to start it from the carrier 2. On the other hand, the transportation service of the carrier 2 terminates.

### (Cultivation environmental data processing)

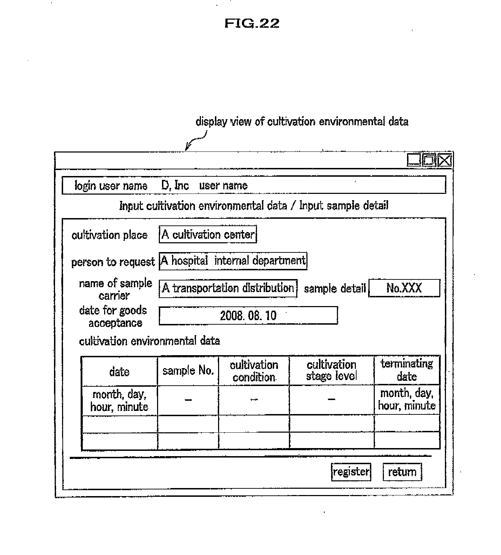

When the cultivation starts (S125(inspection & cultivation start)), the displaying and creating means 104 of the server 7 is constituted to make a display view of cultivation environmental data as shown in Figure 22. The control means 101 transfers a display view of cultivation environmental data to the terminal of place to be forwarded 5a with use of the transmission means 114. The display view of cultivation environmental data as shown in Figure 22 is displayed in the terminal of place to be forwarded 5a. The place to forward (Cultivation center 3) is promoted to show a display of "Input the cultivation environmental data / Input the sample detail (ID)" to input the sample detail (ID) of organism in textbox of the sample detail and further input the date (Month, Day, Time, Minute), Sample No...., Cultivated condition No...., Cultivation stage level, the date scheduled for completion (Month, Day, Time, Minute), or the like in textbox formed like a table of cultivation environmental data. The terminal of place to be forwarded 5a supports the place to be forwarded 5 (cultivation center 3) with the support for easily making the cultivation environmental data by entering a condition of cultivation in textbox. The cultivation environmental data is established by clicking a "registration" button in the place to be forwarded 5 (cultivation center 3) to transfer it from the terminal of place to be forwarded 5a to the server 7 together with the sample detail. (S201(cultivation environmental data transmission) in Figure 11) Then, the registration means 103 registers the cultivation environmental data and the sample detail in the quality data DB 112. (S202(cultivation environmental data registration))

The control means 101 of the server 7 transfers a display view of cultivation environmental data as shown in Figure 22, the cultivation environmental data, and the sample detail to the terminal of place to forward 4a and the terminal of carrier 2a with use of the transmission means 114. (S203(cultivation environmental data transmission)) A display view of cultivation environmental data as shown in Figure 22 is displayed in the terminal of place to forward 4a and the terminal of carrier 2a. The cultivation environmental data as received and the sample detail are displayed on a display view of the cultivation environmental data in the terminal of place to forward 4a and the terminal of carrier 2a. The place to forward 4 and the carrier 2 are able to inspect the cultivation environmental data in the terminal of place to forward 4a and the terminal of carrier 2a, thus to realize a share of data. The consensus development of opinion in confirmation of quality of organism can be smoothly done at the time of goods delivery of organism from the Place to be forwarded 5 to the carrier 2 for the return as later described. It is not required for inspection of all of the cultivation environmental data, but may be limited for inspection as a date for terminating in cultivation (date scheduled for completion).

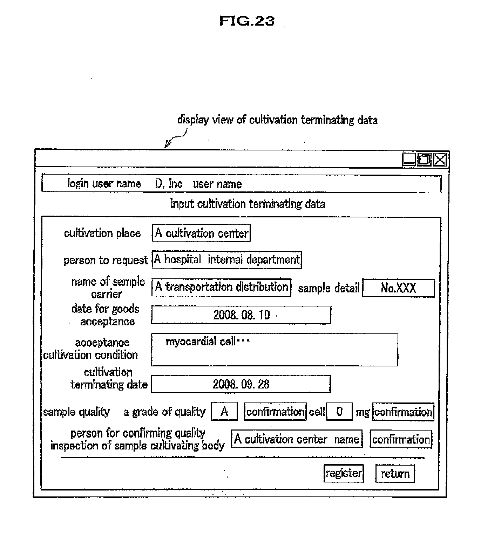

The displaying and creating means 104 is constituted to make a display view of the cultivation completion data as shown in Figure 23 in accordance with the matching data registered in the matching data DB 111 at the date scheduled for terminating the cultivation (date for terminating the cultivation). The control means 101 transfers to the terminal of place to be forwarded 5a with use of the transmission means 114. Then, the display view of cultivation terminating data is displayed in the terminal of place to be forwarded 5a. The place to be forwarded 5 (cultivation center 3) is promoted to show a display of "Input the cultivation terminating data" to inspect whether the organism as cultivated is contaminated by cells or not. This inspection is done before stored in the storage case 100. A result of the inspection is inputted in textbox of a grade of quality and a mass of cell in "quality of sample cultivating body" displayed on a display view of cultivation terminating data at the place to be forwarded 5 (cultivation center 3). The result of inspection is transferred from the terminal of place to be forwarded 5a through the communication line 6 to the server 7. The result of inspection is memorized in the quality data DB 112 of the storage means 115. Then, the result of inspection is transferred to the terminal of place to forward 4a, the terminal of carrier 2a, and the terminal of place to be forwarded 5a with use of the transmission means 114 together with the display view of the cultivation terminating data as shown in Figure 23. Then, the result of inspection is displayed as a grade of quality and a mass of cell in "Quality of sample cultivating body" displayed on a display view of cultivation terminating data at the terminal of place to forward 4a, the terminal of carrier 2a, and the terminal of place to be forwarded 5a. The quality confirmation signal is transferred to the server 7 by clicking a "Confirmation" button corresponding to a grade of quality and a mass of cell by each of the place to forward 4, the carrier 2, and the place to be forwarded 5 at the place to forward 4a, the carrier 2, and the place to be forwarded 5a, respectively. The place to forward 4, the carrier 2, and the place to be forwarded 5 are designed to confirm the quality of organism one another by a record for receiving the quality confirmation signal at the server 7. It is extremely important to confirm the quality of organism one another at the time of doing the receipt and inspection service of sample of the organism to be easily deteriorated. In particular, a person for confirming the quality inspection of sample cultivating body in the place to be forwarded 5 inputs a name in the corresponding textbox, and click the "Confirmation" button to show the fact that the inspection has passed. The name as inputted is transferred from the terminal of place to be forwarded 5 to the server 7 (S204(name of person for confirming the quality inspection transmission)), and registered in the quality data DB 112 of the server 7 (S205(name of person for confirming the quality inspection registration)). Further, the name is transferred from the server 7 to the terminal of place to forward 4a and the terminal of carrier 2a (S206(name of person for confirming the quality inspection transmission)), and shown as a person for confirming the quality inspection of the sample cultivating body on the display view of the cultivation terminating data.

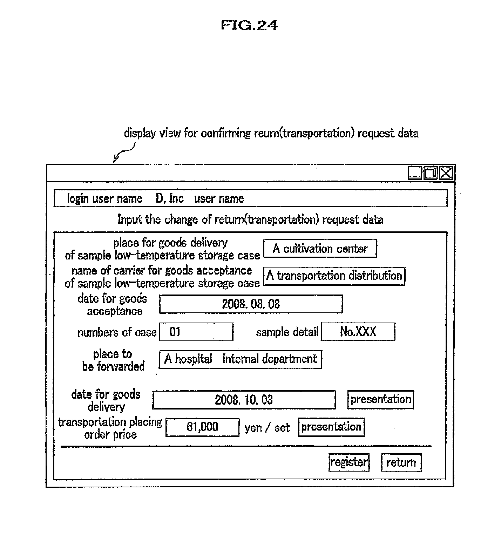

When the quality confirmation signal is received at the server 7, the displaying and creating means 104 makes a display view for confirming the return (forwarding) request data as shown in Figure 24 with use of the matching data registered in the matching data DB 111. As this transportation is forwarded back to the prior place to be forwarded, a place for forwarding the sample low-temperature storage case can be specified in the A cultivation center as the place to be forwarded 5 of the prior forwarding. The place to be forwarded can be specified at the internal department of the A hospital as the place to forward 4 of the prior transportation. The name of carrier for goods receipt for transporting the sample low-temperature storage case can be specified as A transportation distribution of goods of the carrier 2 experienced in the prior transportation. The date for receiving goods can be specified to be a date scheduled for terminating the cultivation (date for terminating the cultivation) memorized in the quality data DB. The date for forwarding can be a date as dates required for the prior transportation are added to the date for receiving goods. The transportation and placing order price can be designated at the same price as the transportation costs of the prior transportation. The sample detail can be designated as the same as the sample detail of the prior transportation.

The return(transportation) request data (so-called matching data) in a display view for confirming the return (transportation) request data made by the displaying and creating means 104 is registered in the matching data DB (111). (S207(return request data registration) The display view for confirming the return (transportation) request data is transferred from the server 7 to the terminal of place to forward 4a, the terminal of carrier 2a, and the terminal of place to be forwarded 5a. (S208(xeturn request data transmission)) The display view for confirming the return (transportation) request data is displayed in the terminal of place to forward 4a, the terminal of carrier 2a, and the terminal of place to be forwarded 5a. The place to forward 4, the carrier 2, and the place to be forwarded 5 (Change of the cultivation center 3) is promoted to show a display of "Input the return (transportation request data). When there are defects in the return (transportation) request data, it can be made to change the date of goods delivery, the transportation placing order price, or the like in the textbox. When there is no change therein, the return (transportation) request data (matching data) is returned to the server 7 by clicking the "Registration" button. (S209(matching data transmission))

When there are changes, the change are judged by the compensation measures 105. When the change is right, the change is considered to be proper as the matching data. When the change is not right, the change is made to modify the matching data to be in a proper range, and the modified matching data is registered in the matching data DB 111. Thus, the contract (matching data) comes to be concluded with and the receiving order comes to be formally established.

### (Inspection and return process)

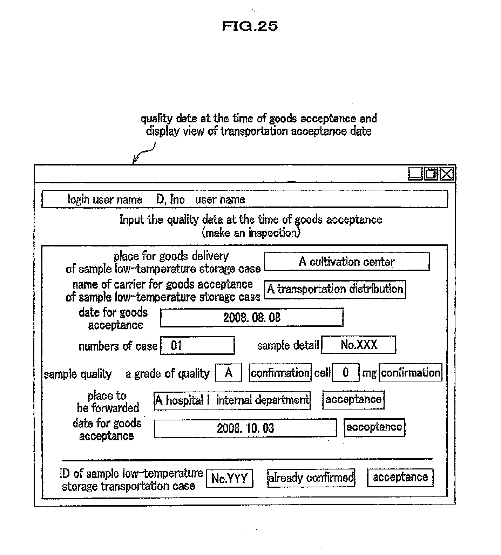

The displaying and creating means 104 is constituted to make a display view of the quality data at the time of receiving goods and the transportation acceptance as shown in Figure 25 in accordance with the matching data as established at the date of goods receipt. The control means 101 transfer to the terminal of place to forward 4a in the hospital 1 to be returned, the terminal of carrier 2a, and the cultivation center 3 to return with use of the transmission means 114. A display view of the quality data at the time of goods receipt and the transportation acceptance are displayed in the terminal of place to forward 4a, the terminal of carrier 2a, and the terminal of place to be forwarded 5a. The place to forward 4 and the carrier 2 are promoted to show a display of "Input the quality data at the time of goods receipt (Make an inspection)" to inspect whether it is contaminated with cells on the spot by the detection element 18 for inspecting contaminant such as cells as infiltrated. (S121(inspection & transportation start)) The inspection can be done in the same manner as the inspection in Figure 19 of the prior transportation (inspection and transportation proeess).(S121(inspection & transportation start))

### (Transportation environmental data processing)

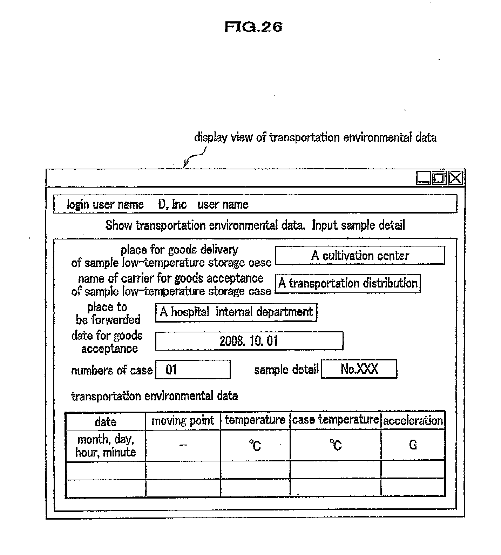

The transportation environmental data processing in this time can be done in the same manner as a processing described in the prior transportation (transportation environmental data processing). When the transportation starts (S121(inspection & transportation start)), the transportation environmental data is transferred from the dedicated terminal 8 to the server 7 (S122(transportation environmental data transmission)), and the transportation environmental data is registered in the quality data DB 112 by the registration means 103 of the server 7. The displaying and creating means 104 of the server 7 makes a display view of the transportation environmental data as shown in Figure 26 in accordance with the transportation environmental data. In response to a request from the terminal of place to forward 4a, the terminal of carrier 2a, and the terminal of place to be forwarded 5a, the control means 101 transfers the display view of the transportation environmental data to the terminal of place to forward 4a, the terminal of carrier 2a, and the terminal of place to be forwarded 5a with use of the transmission means 114. As a result of the transmission, the display view of transportation environmental data as shown in Figure 26 is displayed in the terminal of place to forward 4a, the terminal of carrier 2a, and the terminal of place to be forwarded 5a. The transportation environmental data processing (S124(transportation environmental data tramsmission) etc.) as later described is done in the same manner as the processing described with Figure 20 of the prior transportation (transportation environmental data processing).

### (Receipt and acceptance processing at a place for forwarding back)

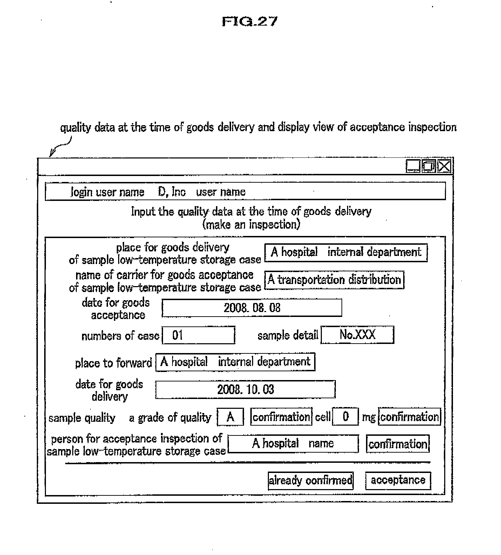

The displaying and creating means 104 makes a display view of the quality data at the time of goods delivery and receipt & acceptance as shown in Figure 27 in accordance with the matching data at the time of goods delivery to the place to forward 4 for returning- The control means 101 transfers it to the terminal of place to forward 4a, the terminal of carrier 2a, and the terminal of place to be forwarded 5a with use of the transmission means 114. The display view of the quality data at the time of goods delivery and receipt & acceptance is displayed in the terminal of place to forward 4a, the terminal of carrier 2a, and the terminal of place to be forwarded 5a. Receipt and acceptance procedure at a place for returning (S125(inspection & cultivation start), 126(name of person for confirming the quality inspection registration), S127(name of person for confirming the quality inspection registration), and S130(name of person for confirming the quality inspection transmission)) can be done in the same manner as described in Figure 21 of the prior transportation (receipt and acceptance procedure at a place for forwarding). Then, a transportation service of the carrier 2 is terminated in.

As above mentioned, the organism transportation supporting system 9 is constituted to refrigerate and hold the sample stored in the storage case 100, and arrange the detection element 18 changing chemical property and physical property by sticking, for example, contaminate in a room temperature area inside the storage case 100. Then, the infiltration of contaminant inside the storage case 100 is inspected in a short period at the time of receiving and forwarding the sample, thus to share the data at least one of the place to forward 4, the carrier 2, and the place to be forwarded 5. Thus, a good condition without contamination of sample can be inspected and accepted at the time of receipt and delivery of sample among these three parties. Accordingly, a service (work) on the subject of organism transportation based on non-contaminant condition of sample can be created and established as a commercial transaction.

### Industrial Applicability

The present invention is preferable as a sample low-temperature storage case preserving, transporting and storing samples of cells, microbes, proteins, or the like used in, for example, regenerative medicine, biochemical study, drug development, medical diagnosis, food inspection, or the like. The present invention is also preferable as transportation transaction supporting system making use of the sample low-temperature storage case.

## Claims

1. A sample law-temperature storage case comprising:
a storage case storing a sample storage case housing a body to be refrigerated;
an introduced case arranged in the storage case and provided with an opening for taking in or out the sample storage case into or from the storage case;
a lid member closing the opening;
a refrigerator refrigerating the sample storage case stored in the storage case through the storage case; and
an adiabatic case housing the storage case and the refrigerator, and restricting a heat transfer entered from an outside to the storage case and the refrigerator, and
wherein
a detection element holding member holding a detection element for detecting contaminant infiltrated in the storage case is provided near the opening, and
a window portion for inspecting a reaction to the contaminant contained in the detection element from an outside of the lid member is provided in the lid member in a state closing the opening by the lid member.

2. The sample low-temperature storage case according to Claim 1,
wherein
the detection element holding member comprises
an air introduced guide introducing an air entering inside the introduced case in the predetermined direction through a sealing portion between the opening and the lid member, and I
a detection element arrangement portion arranging the detection element in a path of the air introduced by the air introducing guide.

3. The sample law-temperature storage case according to Claim 1 or 2,
wherein
the window portion is made of permeable material so as to optically inspect the reaction to contaminant contained in the detection element held by the detection element holding member.

4. The sample low-temperature storage case according to Claim 1 or 2,
wherein
the window portion is made of magnetic-flux permeable material so as to magnetically inspect the reaction to contaminant contained in the detection element held by the detection element holding member.

5. The sample low-temperature storage case according to any of Claim 1 to 4, wherein
the storage case comprises
a temperature measuring element measuring a temperature of the sample storage case stored in the storage case,
a data processing section making temperature data based on a temperature measured by the temperature measuring element, and
a data memory storing the temperature data made by the data processing section, the temperature data memorized in the data processing section being possible for electronically taking out.

6. The sample low-temperature storage case comprising:
a storage means storing a sample storage case housing a body to be refrigerated;
a sample introduced means arranged in the storage means and provided with an opening for taking in or out the sample storage case into or from the storage means;
a closing means closing the opening;
a coldness generating means refrigerating the sample storage case stored in the storage means through the storage means; and
an adiabatic means housing the storage means and the coldness generating means and restricting a heat transfer entered from an outside to the storage case and the coldness generating means,
wherein
a detection means for detecting contaminants infiltrated in the storing means is provided near the opening, and
a window portion for inspecting the reaction to the contaminant by the detection means from an outside of the closing means is provided in the closing means in a state closing the opening by the closing means.

7. In an organism transportation supporting system housing and transporting an organism as a body to be refrigerated, comprising an storage case storing a sample storage case housing the body to be refrigerated, an introduced case arranged in the storage case and providing with an opening for taking in or out the sample storage case into or from the storage case, a lid member closing the lid member, a refrigerator refrigerating the sample storage case stored in the storage case through the storage case, an adiabatic case housing the storage case and the refrigerator and restricting a heat transfer entered from an outside to the storage case and the refrigerator,
wherein
a detection element holding member holding a detection element for detecting contaminant infiltrated in the storage case is provided near the opening, and
a window portion for detecting the reaction to contaminant contained in the detection element from an outside of the lid member is provided in the lid member in a state closing the opening by the lid member,
the organism transportation supporting system comprising:
a detection device for detecting the reaction through the window portion,
a receiving means for receiving a result of detection of the reaction from the detection device,
a memory means memorizing the result of detection, and
a transmission means connected through a communication line to at least two terminals among a first terminal possible for operating by a place to forward, a second terminal possible for operating by a carrier, and a third terminal for operating by a place to be forwarded, to transmit the result of detection.

8. The organism transportation supporting system according to Claim 7,
wherein
a detection done by the detection device is done after transporting in a state housing an organism in the sample low-temperature storage case.

9. The organism transportation supporting system according to Claim 8,
wherein
an detection done by the detection device is done before transporting.

10. The organism transportation supporting system according to any of Claims 7 to 9,
wherein
the communication line is offered for a public use.

11. The organism transportation supporting system according to any of Claims 7 to 10,
wherein
data received from the detection device by the receiving means is done through the communication line offered for a public use.

12. The organism transportation supporting system according to one of Claims 7 to 11,
wherein
the sample low-temperature storage case comprises
the temperature measuring element measuring a temperature of the sample storage case stored in the storage case,
a data processing section making data based on the temperature measured by the temperature measuring element, and
a data memory storing the temperature data made by the data processing section, and
wherein
the receiving means receives the temperature data,
the storage means memorizes the temperature data, and
the transmission means is connected through the communication line to the terminal to transfer the temperature data.
